(19) Europäisches Patentamt
European Patent Office
Office européen des brevets

(11) EP 4 428 523 A1

(12) **EUROPÄISCHE PATENTANMELDUNG**

(43) Veröffentlichungstag:
**11.09.2024 Patentblatt 2024/37**

(21) Anmeldenummer: **24161466.8**

(22) Anmeldetag: **05.03.2024**

(51) Internationale Patentklassifikation (IPC):
***G01N 21/27*** *(2006.01)* ***G01N 21/64*** *(2006.01)*

(52) Gemeinsame Patentklassifikation (CPC):
**G01N 21/278; G01N 21/643**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **09.03.2023 DE 102023105878**

(71) Anmelder: **Bundesanstalt für Materialforschung und -Prüfung (BAM)**
**12205 Berlin (DE)**

(72) Erfinder:
- **RESCH-GENGER, Dr. Ute**
  **12203 Berlin (DE)**
- **GÜTTLER, Arne**
  **12161 Berlin (DE)**
- **PAULI, Dr. Jutta**
  **12555 Berlin (DE)**
- **WÜRTH, Dr. Christian**
  **10245 Berlin (DE)**

(74) Vertreter: **Zimmermann & Partner Patentanwälte mbB**
**Postfach 330 920**
**80069 München (DE)**

(54) **VERFAHREN ZUR RÜCKFÜHRBAREN KALIBRIERUNG BZW. REFERENZIERUNG EINER FLUORESZENZMESSUNG IN EINEM FLUORESZENZMESSGERÄT MIT EINER KALIBRIERZUSAMMENSETZUNG**

(57) Die Erfindung betrifft ein Verfahren zur rückführbaren Kalibrierung bzw. Referenzierung einer Fluoreszenzmessung in einem Fluoreszenzmessgerät mit einer Kalibrierzusammensetzung, aufweisend mindestens einen fluoreszenten Kalibrierfarbstoff. Die Rückführbarkeit und damit Reproduzierbarkeit der Kalibrierkette wird erfindungsgemäß durch eine hochpräzise Einwaage des Kalibrierfarbstoffes bei der Herstellung der Kalibrierzusammensetzung und damit durch die Anbindung an die SI-Einheiten Masse und Mol realisiert. Die Erfindung betrifft weiterhin ein Kit zur rückführbaren Kalibrierung bzw. Referenzierung einer Fluoreszenzmessung in einem Fluoreszenzmessgerät mit einer Kalibrierzusammensetzung, aufweisend mindestens einen fluoreszenten Kalibrierfarbstoff, mit dem erfindungsgemäßen Verfahren.

EP 4 428 523 A1

## Beschreibung

Die Erfindung betrifft ein Verfahren zur rückführbaren Kalibrierung bzw. Referenzierung einer Fluoreszenzmessung in einem Fluoreszenzmessgerät mit einer Kalibrierzusammensetzung, aufweisend mindestens einen fluoreszenten Kalibrierfarbstoff. Die Rückführbarkeit und damit Reproduzierbarkeit der Kalibrierkette wird erfindungsgemäß durch eine hochpräzise Einwaage des Kalibrierfarbstoffes bei der Herstellung der Kalibrierzusammensetzung und damit durch die Anbindung an die SI-Einheiten Masse und Mol realisiert. Die Erfindung betrifft weiterhin ein Kit zur rückführbaren Kalibrierung bzw. Referenzierung einer Fluoreszenzmessung in einem Fluoreszenzmessgerät mit einer Kalibrierzusammensetzung, aufweisend mindestens einen fluoreszenten Kalibrierfarbstoff, mit dem erfindungsgemäßen Verfahren.

In den Lebenswissenschaften werden vielfach Fluoreszenzmethoden für die Detektion und die Quantifizierung von Analyten eingesetzt. Beispiele reichen von Immunoassays bis zu PCR-Verfahren, wie sie beispielsweise für die Detektion von Viren wie COVID-19 eingesetzt werden. Zur Signalerzeugung werden dabei verschiedene Fluoreszenzfarbstoffe (hier im Folgenden bezeichnet als Fluoreszenzmarker) verwendet, die beispielsweise an bestimmte Antikörper oder DNA-Sequenzen kovalent gebunden sind oder in die DNA interkalieren. Als Ausleseparameter werden oftmals bei einer festen Anregungswellenlänge in einem bestimmten Emissionswellenlängenbereich ermittelte Fluoreszenzintensitäten ermittelt, die dann z.B. über eine zuvor aufgenommene Kalibriergerade für die Analytquantifizierung aus den erfolgten Fluoreszenzmessungen mit der Konzentration des Analyten korreliert werden. Diese Messungen erfolgen vielfach integral, d.h. die Wellenlängenselektion für das Emissionssignal erfolgt mittels einfacher optischer Komponenten wie Filter. Dabei ist zu berücksichtigen, dass das mit preiswerten Detektoren wie Photodioden detektierte, integrale Fluoreszenzsignal zusätzlich zur Menge bzw. Konzentration des nachzuweisenden Fluoreszenzmarkers durch das wellenlängenabhängige Transmissionsprofil des Filters und die spektrale Empfindlichkeit des Detektionssystems beeinflusst wird. Im gemessenen integralen Fluoreszenzsignal spiegelt sich daher ein gerätespezifischer Beitrag wider.

Multiparametrische Fluoreszenzmethoden, die die Fluoreszenzparameter relative Fluoreszenzintensität bzw. integrale Fluoreszenzintensität, Emissionsspektrum, Fluoreszenzanregungsspektrum, Fluoreszenzabklingverhalten bzw. -lebensdauer und Emissionsanisotropie ausnutzen können, bieten in ihrer Anwendung zahlreiche Vorteile und sind daher in vielfältigen Anwendungsbereichen von großem Interesse. So zeichnen sie sich durch

- eine relativ einfache Durchführung;
- vielfältigen Miniaturisierungsoptionen der hierfür benötigten Geräte; und
- insbesondere eine große Nachweisstärke, die die Detektion einzelner Moleküle oder Partikel ermöglicht;

aus.

Neben dem bereits beschriebenen gerätespezifischen Beitrag am Fluoreszenzsignal muss bei der Durchführung von Fluoreszenzmethoden jedoch auch beachtet werden, dass die optischen Eigenschaften von Fluorophoren wie die spektrale Lage und Intensität ihrer Absorptions- und Emissionseigenschaften umgebungssensitiv sind. Darüber hinaus ist die Fluoreszenzintensität der Fluorophore abhängig von der Anregungslichtintensität bzw. Anregungsleistungsdichte. Dies gilt für alle Fluoreszenzmethoden und Fluoreszenzgeräte.

Die Abhängigkeit der Fluoreszenzintensität von der Anregungslichtintensität wird oft erfasst, indem eine Signalreferenzierung erfolgt (sogenannte ratiometrische Messungen bzw. Messungen des Quotienten des von der Analytmenge abhängigen Probensignals und eines inerten bzw. konstanten Referenzsignals). Dieses Referenzsignal kann dabei über einen weiteren Referenzfluorophor erzeugt werden oder mittels eines Referenzdetektors wie einer Photodiode.

Gerätespezifische Beiträge zu gemessenen "unkorrigierten" Fluoreszenzsignalen sind auf die wellenlängenabhängigen Eigenschaften der optischen und optoelektronischen Eigenschaften der verwendeten Gerätebauteile wie Lichtquellen, Filter und Detektoren zurückzuführen. Dies führt dazu, dass sich selbst die mit verschiedenen Fluoreszenzmessgeräten desselben Bautyps gemessen Fluoreszenzsignale ein- und derselben Probe unterscheiden können.

Zudem kann eine Alterung der Gerätekomponenten ihre Signalbeiträge verändern. Hier ist es wünschenswert eine regelmäßige Gerätekalibrierung, Funktionsprüfung und den Abgleich von Fluoreszenzmessgeräten untereinander zu ermöglichen. Insbesondere für vergleichbare Messungen und Applikationen in gesetzlich geregelten Bereichen wie der Medizin oder der medizinischen Diagnostik ist dies von Relevanz. Darüber hinaus ist dies auch eine Anforderung bei der Zulassung von Fluoreszenzmessverfahren und -geräten.

Die integrale Fluoreszenzintensität eines Analyten gemessen mit einem Fluoreszenzmessgerät ist daher per se zunächst nicht quantifizierbar, sondern stellt erst einmal eine relative integrale Fluoreszenzintensität dar. Für eine Quantifizierung ist immer eine Kalibrierung notwendig, die alle bereits angeführten Punkte berücksichtigen sollte.

Insbesondere Messungen mit Fluoreszenzmessgeräten im medizinisch relevanten Bereich müssen besonders hohen Ansprüchen bezüglich der Zuverlässigkeit und der Messunsicherheiten genügen. Hierfür sind Kalibrierverfahren geeignet, die eine Rückführung der Messergebnisse erlaubt. Rückführbare Messwerte sind durch eine ununterbrochene Kette von Vergleichsmessungen mit bekannter Messunsicherheit auf einen anerkannten Standard bezogen. Die Anforderungen an eine Rückführbarkeit auf SI-Einheiten sind in der ISO/EN 17025 geregelt.

Darüber hinaus ist die Rückführbarkeit der Messwerte auch für die Zulassung neuer Geräte von Interesse und um prinzipiell eine hoch qualitative Möglichkeit zur Kalibrierung bzw. Referenzierung von Fluoreszenzsignalen in einem Fluoreszenzmessgerät zu schaffen, bei der die Messunsicherheit genau bekannt ist.

Aus dem Stand der Technik ist beispielsweise das MESF-Konzept für die Kalibrierung der Fluoreszenzintensität bekannt. Hierbei wird die Kalibrierung unter Verwendung fluoreszierender Mikropartikel bekannter Fluoreszenzintensität durchgeführt [1]. MESF steht für *"molecular equivalent soluble fluorochrome"* und ist ein Maß für die Anzahl der zu einem Messsignal führenden Fluoreszenzmoleküle. Dieses Konzept ist vor allem aus der Durchflußzytometrie bekannt. Dabei werden aber umgebungsbedingte Änderungen in den signalrelevanten Eigenschaften der im Partikel eingebauten Fluorophore, insbesondere Änderungen in der Fluoreszenzquantenausbeute, nicht erfasst. Zudem können sich die Partikel in ihrer Farbstoff-Beladungsdichte unterscheiden (particle-to-particle variation), was bei Ensemble-Messungen, die über eine große Anzahl von Partikeln mitteln, nicht erfasst wird. Dieses Konzept wurde bislang auch nicht auf SI-Einheiten zurückgeführt.

Weiterhin bekannt sind Mikrokanalsysteme, die mit Kalibrierlösungen befüllt werden können. Die Mikrokanalsysteme werden von verschiedenen Anbietern angeboten und können als solche höchstens als Bauteil für ein Konzept zur Kalibrierung in der Fluoreszenzspektroskopie dienen. Eine Kalibriermethode, die eine rückführbare Signalreferenzierung bietet, wird nicht zur Verfügung gestellt.

Wünschenswert wäre es daher ein Verfahren zur Kalibrierung bzw. Referenzierung einer Fluoreszenzmessung in einem Fluoreszenzmessgerät zur Verfügung zu haben, mit der nicht nur eine Kalibrierung auf einfache Art und Weise vorgenommen werden kann, sondern die gleichzeitig auch eine Rückführung der Messergebnisse auf SI-Einheiten erlaubt und einfach zu reproduzieren ist.

Hierfür stellt die vorliegende Erfindung ein Verfahren zur rückführbaren Kalibrierung bzw. Referenzierung einer Fluoreszenzmessung in einem Fluoreszenzmessgerät mit einer Kalibrierzusammensetzung, aufweisend mindestens einen fluoreszenten Kalibrierfarbstoff zur Verfügung, **dadurch gekennzeichnet, dass** das Verfahren die Schritte aufweist

- Einwaage mindestens eines Kalibrierfarbstoffs mit Hilfe einer kalibrierten oder geeichten Feinwaage;
- Herstellen einer Stammlösung einer Kalibrierzusammensetzung durch Zugabe eines Lösungsmittels oder einer Polymerlösung bekannter Masse;
- Herstellen einer Verdünnungsreihe mit bekannten Konzentrationen des mindestens einen Kalibrierfarbstoffs;
- Messen des Absorptionsspektrum für jede Konzentration der Verdünnungsreihe der Kalibrierzusammensetzung in einem Absorptionsspektrometer und Berechnung des molaren Extinktionskoeffizienten aus der gemessenen Extinktion für jede Konzentration des mindestens einen Kalibrierfarbstoffs der Verdünnungsreihe;
- Messen des Emissionsspektrums für jede Konzentration der Verdünnungsreihe der Kalibrierzusammensetzung in dem einen Fluoreszenzmessgerät;
- Berechnung der integralen Fluoreszenzintensität für jede Konzentration des mindestens einen Kalibrierfarbstoffs der Verdünnungsreihe aus den Emissionsspektren;
- Zuordnung des jeweiligen molaren Extinktionskoeffizienten und der jeweiligen integralen Fluoreszenzintensität zu einer Konzentration der Kalibrierzusammensetzung.

Weiterhin wird ein Kit zur rückführbaren Kalibrierung bzw. Referenzierung einer Fluoreszenzmessung in einem Fluoreszenzmessgerät mit einer Kalibrierzusammensetzung, aufweisend mindestens einen fluoreszenten Kalibrierfarbstoff mit einem Verfahren gemäß einem der Ansprüche 1 bis 9 zur Verfügung gestellt, aufweisend

- mindestens einen Kalibrierfarbstoff bekannter Masse;
- eine Arbeitsanweisung.

**Detaillierte Beschreibung**

Für die Signalreferenzierung von Fluorophor-markierten Proben und die Vergleichbarkeit von Fluoreszenzmessgeräten untereinander (Anpassung von Geräteempfindlichkeiten und Signalgrößen, die auf unterschiedliche spektrale Eigenschaften wie wellenlängenabhängige Transmissionen oder spektrale Empfindlichkeiten der zum Geräteaufbau eingesetzten optischen und opto-elektronischen Bauteile zurückzuführen sind und die sich durch eine Alterung der Gerätebauteile zeitabhängig verändern können) sowie eine Performance-Validierung bzw. Funktionskontrolle (IPV) können Kalibrierfarbstoffe verwendet werden.

Die vorliegende Erfindung ist in einer ersten Ausführungsform dafür geeignet, Fluoreszenzmessgeräte zu kalibrieren, womit unterschiedliche Fluoreszenzmessgeräte untereinander vergleichbar werden. Durch die Kalibrierung eines Fluoreszenzmessgerätes kann darüber hinaus dessen Funktionalität bzw. dessen Geräteeigenschaften überprüft

werden. Durch wiederholte Kalibrierungen über einen längeren Zeitraum ist es damit möglich, auftretende Veränderungen in der Gerätefunktionalität unmittelbar zu erkennen. Da die Geräteeigenschaften des Fluoreszenzmessgerätes Einfluss auf die Messergebnisse haben, kann auf diese Art eine wesentliche Fehlerquelle bei der Fluoreszenzmessung ausgeschlossen werden.

Bei der Kalibrierung einer Fluoreszenzmessung mit einem Fluoreszenzmessgerät müssen verschiedene Einflussgrößen berücksichtigt werden. Das von einem Detektor eines Fluoreszenzmesssystems detektierte Fluoreszenzsignal hängt bei ansonsten konstanten Geräteeinstellungen wie der Spaltbreite (spektrale Bandbreite) des Anregungs- und des Emissionsmonochromators und derselben optischen Bauelemente im Anregungs- und Emissions- bzw. Detektionsstrahlengand wie Filter und Polarisatoren (und Polarisatorstellung) von folgenden Einflussgrößen ab:

a.) Den gerätespezifischen Einflussgrößen

- Spektraler Photonenfluss bei der Anregungswellenlänge $\lambda_{ex}$ am Probenort (auch bezeichnet als Anregungsintensität),
- Spektrale Empfindlichkeit $s(\lambda_{em})$ des Detektionssystems, die von der Emissionswellenlänge $\lambda_{em}$ abhängig ist.

b.) Den probenspezifischen Beiträgen

- Absorption (A) eines fluoreszierenden Farbstoffs bei der Anregungswellenlänge $\lambda_{ex}$ ($\lambda(\lambda_{ex}) = 1\text{-}10^{-E(\lambda ex)}$; E: Extinktion; $E = \varepsilon \times c \times l$; $\varepsilon(\lambda_{ex})$: molarer (dekadischer) Extinktionskoffizient bei der Wellenlänge $\lambda_{ex}$; c: Konzentration; d: Schichtdicke bzw. optische Weglänge, bestimmt durch die verwendete Küvette),
- Fluoreszenzquantenausbeute des Farbstoffs in dem gewählten Lösemittel bei der verwendeten Temperatur.

Bei der Kalibrierung einer Fluoreszenzmessung in einem Fluoreszenzmessgerätes müssen daher folgende Parameter berücksichtigt:

- die Wellenlängenrichtigkeit von Anregungs- und Detektionskanal (bei Verwendung dispergierender Elemente),
- die Wellenlängenabhängige der (relativen) spektralen Empfindlichkeit des Detektionssystems.

Die Erfindung stellt hierfür ein Verfahren zur Verfügung, in dem eine Kalibrierzusammensetzung für die Kalibrierung bzw. Referenzierung und damit für die Signalreferenzierung genutzt wird, wobei die Kalibrierzusammensetzung mindestens einen fluoreszenten Kalibrierfarbstoff aufweist. Die Kalibrierzusammensetzung kann daher einen oder auch mehrere Kalibrierfarbstoffe aufweisen. In einer Ausführungsform weist die Kalibrierzusammensetzung zwischen 1 und 5 Kalibrierfarbstoffen auf, bevorzugt zwischen 1 und 3 Kalibrierfarbstoffen. Weist die Kalibrierzusammensetzung mehr als einen Kalibrierfarbstoff auf, so muss eine wie auch immer geartete Wechselwirkung zwischen den Kalibrierfarbstoffen ausgeschlossen werden können oder die Art der Wechselwirkung muss gut bekannt sein, um einen Einfluss auf Messergebnisse in der Fluoreszenzmessung auszuschließen oder zu berücksichtigen. In einer besonders bevorzugten Ausführungsform der Erfindung weist die Kalibrierzusammensetzung genau einen Kalibrierfarbstoff auf.

Geeignete Kalibrierfarbstoffe im Sinne der vorliegenden Erfindung sind ausgesucht aus einer Gruppe aufweisend organische Farbstoffe, Farbstoff-dotierter oder Farbstoff-beladener Polymer-Systeme und fluoreszente Nanopartikel.

Geeignete fluoreszente Nanopartikel können ausgewählt sein aus einer Gruppe aufweisen Polymer-Nanopartikel und Silika-Nanopartikel, jeweils beladen mit organischen Farbstoffen oder Halbleiterquantenpunkten wie II/VI- oder III/V-Halbleiterquantenpunkten.

In einer Ausführungsform der vorliegenden Erfindung ist der mindestens eine Kalibrierfarbstoff ein organischer Farbstoff, wobei der organische Farbstoff ausgesucht ist aus der Gruppe aufweisend ultraviolette Farbstoffe, deren Emissionsbereich im Spektralbereich zwischen 200 nm und 425 nm liegt, blaue Farbstoffe, deren Emissionsbereich im Spektralbereich zwischen 425 nm und 485 nm liegt, grüne Farbstoffe, deren Emissionsbereich im Spektralbereich zwischen 485 nm und 560 nm liegt, gelb/orange Farbstoffe, deren Emissionsbereich im Spektralbereich zwischen 560 nm und 600 nm liegt, rote Farbstoffe, deren Emissionsbereich im Spektralbereich zwischen 600 nm und 780 nm liegt und nahinfrarote Farbstoffe, deren Emissionsbereich im Spektralbereich zwischen 780 nm und 1000 nm liegt.

In einer Ausführungsform der Erfindung ist der Kalibrierfarbstoff ein roter Farbstoff vorzugsweise ausgewählt aus der Gruppe der Farbstoffe, deren Emission im Spektralbereich von 600 nm bis 780 nm liegt.

In einer Ausführungsform ist der rote Farbstoff ausgewählt aus der Gruppe der Acridine, Arylmethane-, Azo-, Cyanine-Farbstoffe, Carbopyronine, Chlorins/bacteriochlorine, Heterocycle, Oxazine, Phenanthridine, Phthalocyanine, Porphyrine, Rhodamine und ähnliche.

In einer weiteren Ausführungsform ist der rote Farbstoff ausgewählt aus der Gruppe der Farbstoffe FEW S0387, Methylenblau, DY 610, ATTO 610, Bodipy 610, Bodipy 650, ATTO 594, DY 480, ATTO 633, Alexa Fluor 647, Cyanine5

(CY5), ATTO 680, Cyanine5.5 [CY55], Quasar 670, Quasar 705, FAM alkin, 5-isomer, FEW S0536, FEW S0586, FEW S2038, FEW S2314, FEWS2405, FEW S2381, FEWS0247, FEW S0584, FEWS0223, FEWS2197, FEW S0436, FEW S0536, FEW S0586, FEW S2308, FEW S2314, FEW S2405, FEW S2381, DyLight 633, TO-PRO-3-DANN, DDAO pH 9.0, Nile Blue, EtOH, TOTO-3-DANN, DyLight 649, Carboxynaphthofluorescein pH 10.0, Allophycocyanin, Alexa 633, Alexa Fluor 660, TruRed, Alexa Fluor 680, ATTO 620, ATTO Rho14, ATTO 643, ATTO 647, ATTO 655, ATTO Oxa12 und ATTO 665, 5/6 ROX. Die Farbstoffbezeichnungen entsprechen den gängigen Handelsnamen der jeweiligen Firmen, die i.a. Farbstoffanbieter sind.

In der Tabelle 1 sind einige der genannten roten Farbstoffe mit ihren Strukturformeln angegeben.

Tabelle 1: Beispiele für rote Farbstoffe

| Rote Farbstoffe | Strukturformel |
|---|---|
| 5/6 ROX | 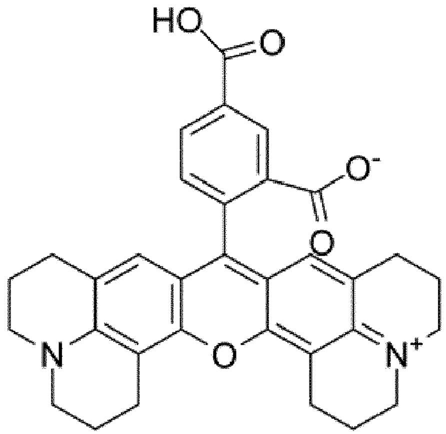 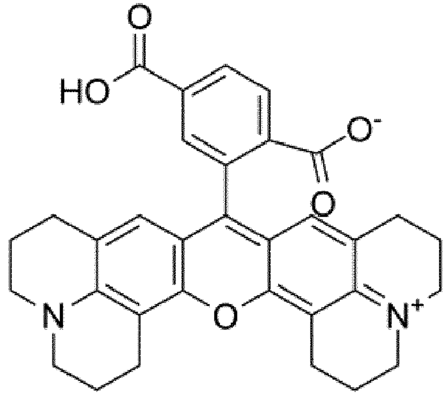 |
| FEW S0387 | 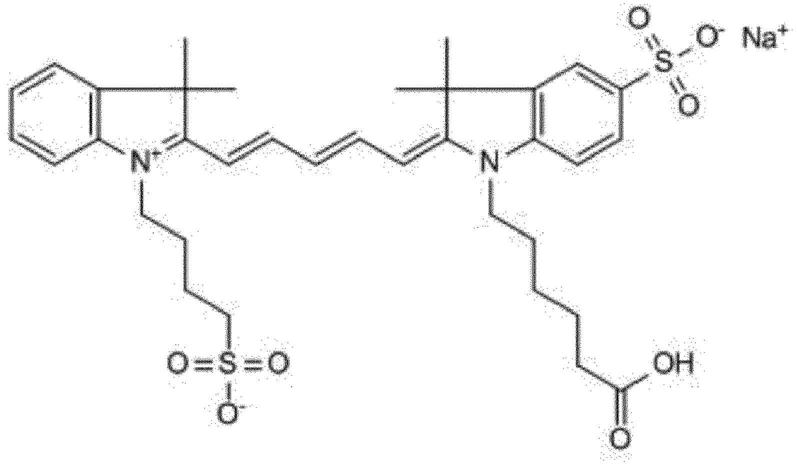 |

(fortgesetzt)

| Rote Farbstoffe | Strukturformel |
|---|---|
| Methylenblau | 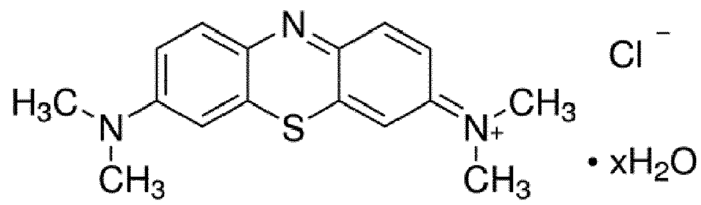 |
| DY 610 | 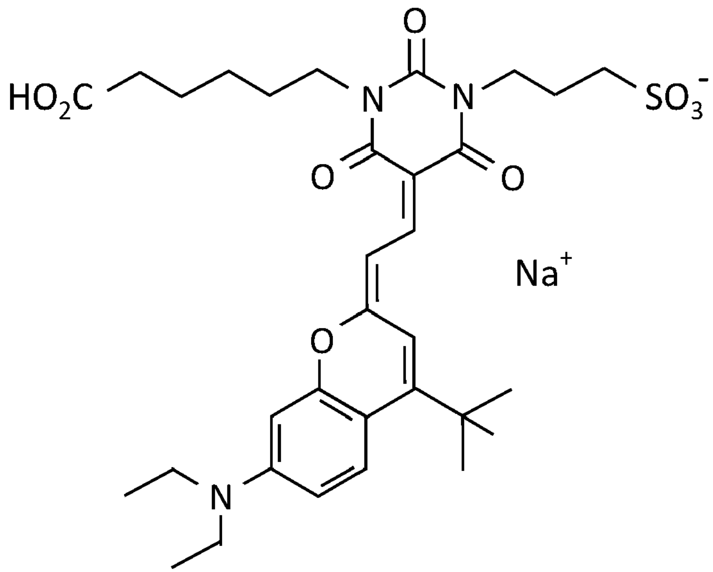 |

(fortgesetzt)

| Rote Farbstoffe | Strukturformel |
| --- | --- |
| ATTO 610 | 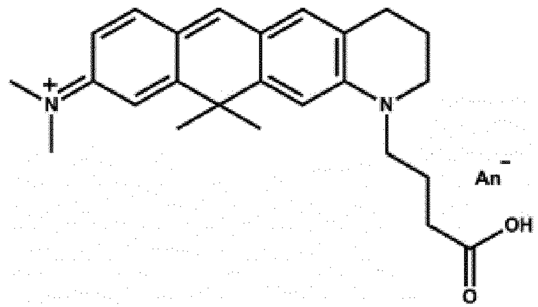 |
| Bodipy 610 | 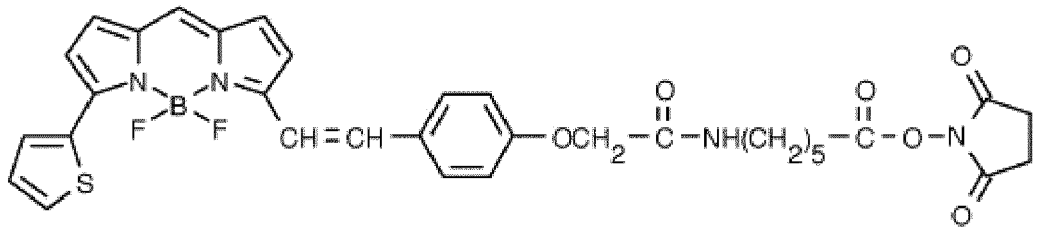 |
| ATTO 633 | 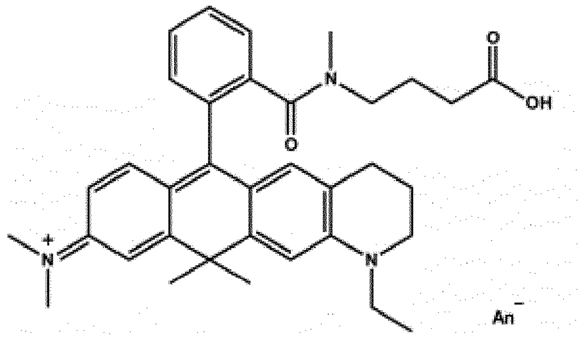 |

(fortgesetzt)

| Rote Farbstoffe | Strukturformel |
| --- | --- |
| Alexa Fluor 647 | 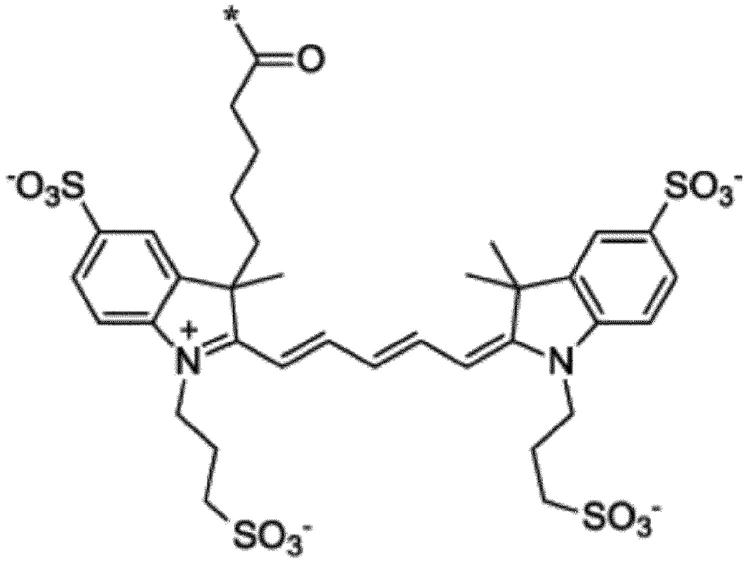 |
| Cyanine5 (CY5) | 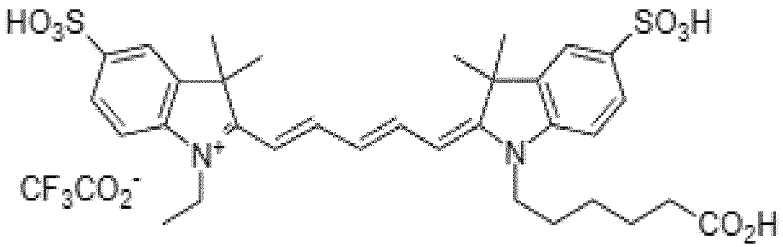 |

(fortgesetzt)

| Rote Farbstoffe | Strukturformel |
| --- | --- |
| ATTO 680 | 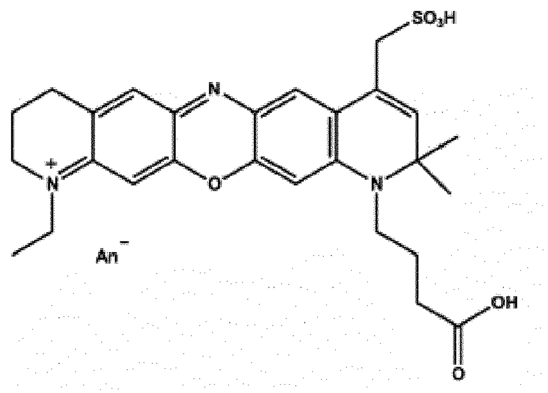 |
| 5-isomer | 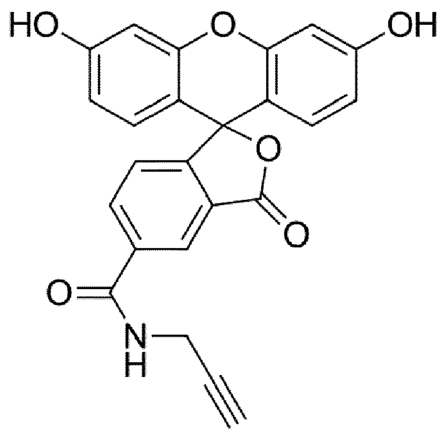 |

(fortgesetzt)

| Rote Farbstoffe | Strukturformel |
|---|---|
| Alexa 633 | 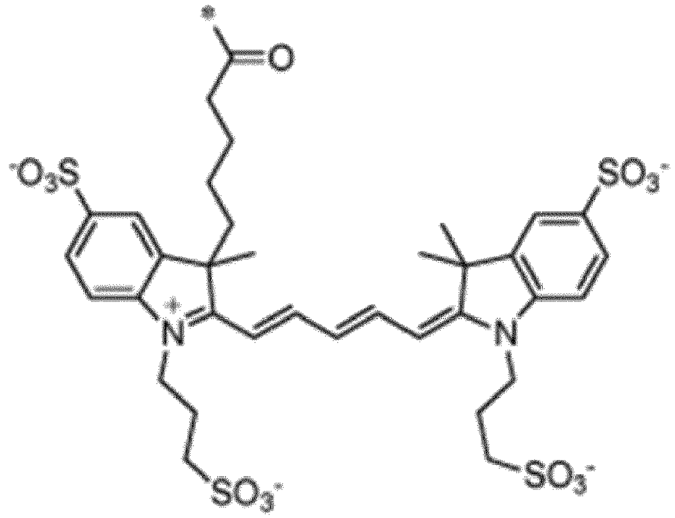 |
| ATTO 594 | 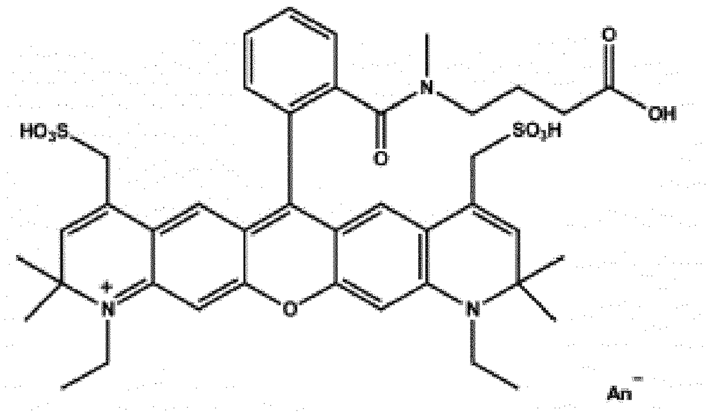 |

(fortgesetzt)

| Rote Farbstoffe | Strukturformel |
|---|---|
| DY 480 | 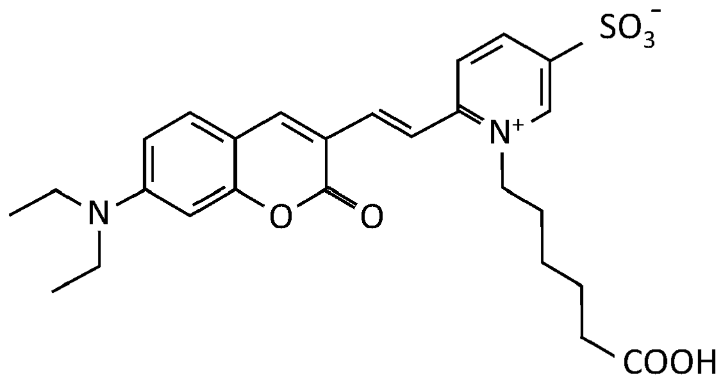 |

In einer weiteren Ausführungsform der Erfindung ist der Kalibrierfarbstoff ein blauer Farbstoff vorzugsweise ausgewählt aus der Gruppe von Farbstoffen, deren Emission im Spektralbereich von 425 nm bis 485 nm liegt.

In einer Ausführungsform ist der blaue Farbstoff ausgewählt aus der Gruppe aufweisend Aromatic hydrocarbons, Biomolecules, Coumarins, Heterocycles, Indoles, Oligophenylens, Polycyclic aromatic hydrocarbons, Stilbene und ähnliche.

In einer weiteren Ausführungsform ist der blaue Farbstoff ausgewählt aus der Gruppe aufweisend Fluorescein 27, Fluorescein isothiocyanate (FITC), FLU, ATTO 488, Oregon Green 488 (OG488), Oregon Green 514 (OG514), Rhodamine Green (RGR), DY 430, DY 431, DY 478, DY 488, DY 490, DY 495, DY 505, Alexa Fluor 430, Alexa Fluor 488, Alexa Fluor 514, ATTO 495, ATTO 465, ATTO Rho110, ATTO 514, ATTO 520, FEW S2409, MitoTracker Green, calcein ph 9.0, Fluo 4, FDA, DTAF, CFDA, DyLight 488, Rhodamine 110, BCECF pH 5.5, PicoGreendsDNA, SYBR Green I, CyQuant GR-DANN, NeuroTrace 500/525, green, fluorescent Nissl stain-RNA, Rhodol Green antibody conjugate pH 8.0, Fluoro-Emerald, Nissl, 5-(and-6)-Carboxy-2', 7'-dichlorofluorescein pH 9.0, DM-NERF pH 4.0, NBD-X, Cy2, JOE, TET, CAL FLUOR Gold 540, Quasar 570, Cy 3, TAMRA und FAM, FAM-alkin 5 isomer.

In der Tabelle 2 sind einige der genannten blauen Farbstoffe mit ihren Strukturformeln angegeben.

Tabelle 2: Beispiele für blaue Farbstoffe

| Blauer Farbstoff | Strukturformel |
|---|---|
| Fluorescein 27 (F27) | 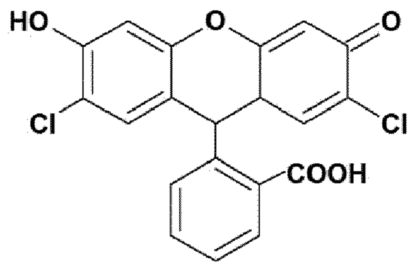 |
| FITC | 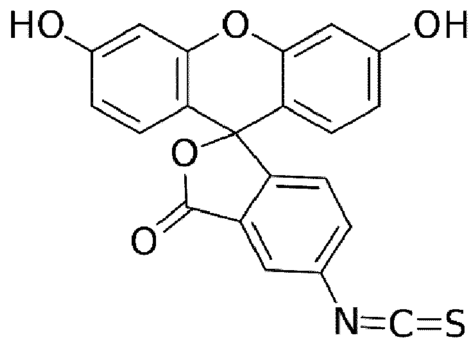 |
| FAM | 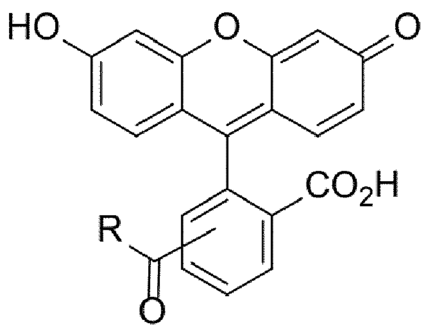 |

(fortgesetzt)

| Blauer Farbstoff | Strukturformel |
|---|---|
| FAM-alkin, 5 Isomer | 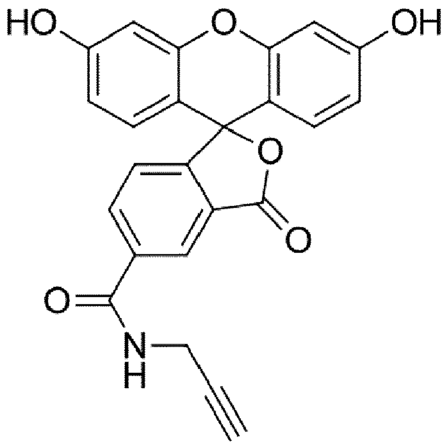 |
| JOE | 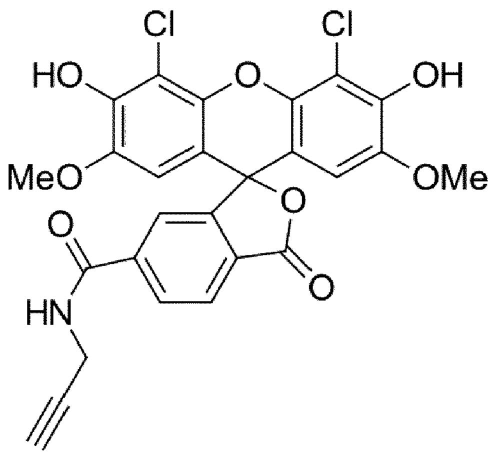 |
| TET | 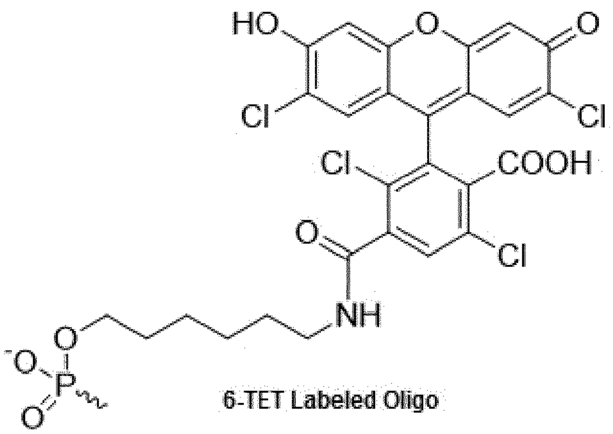 |
| CAL FLUOR Gold 540 | 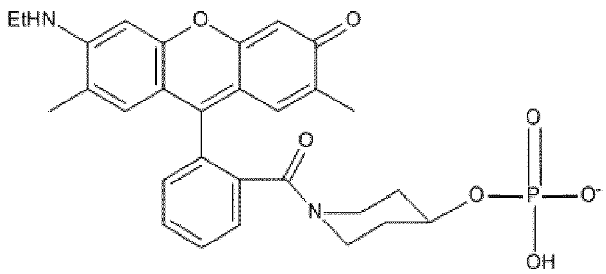 |

(fortgesetzt)

| Blauer Farbstoff | Strukturformel |
|---|---|
| Quasar 570 | 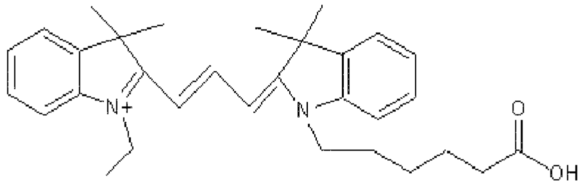 |
| Cy 3 | 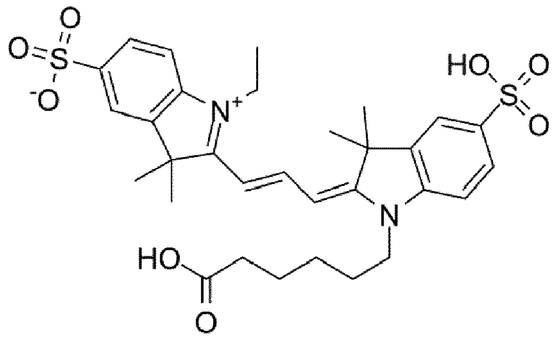 |
| TAMRA | 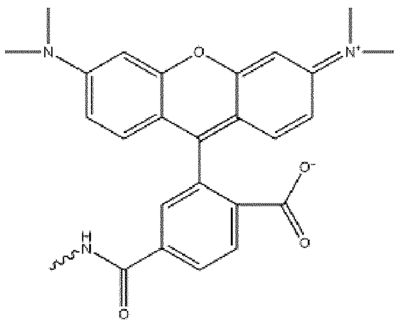 |
| FLU | 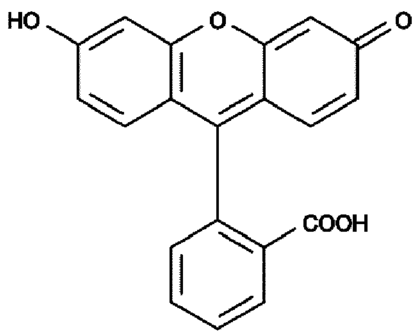 |
| ATTO 488 | 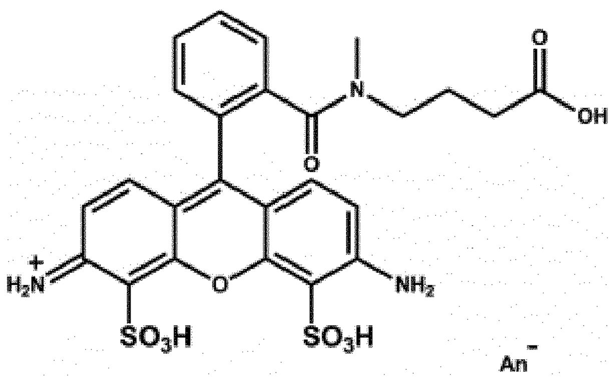 |

(fortgesetzt)

| Blauer Farbstoff | Strukturformel |
|---|---|
| Oregon Green 488 (OG 488) | 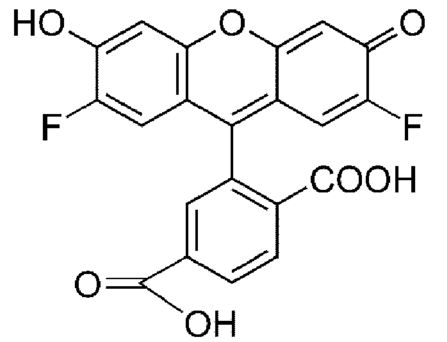 |
| Oregon Green 514 (OG 514) | 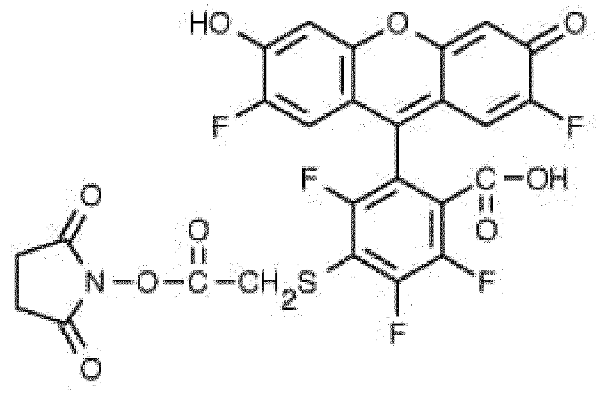 |
| Rhodamin Green (RGR) | 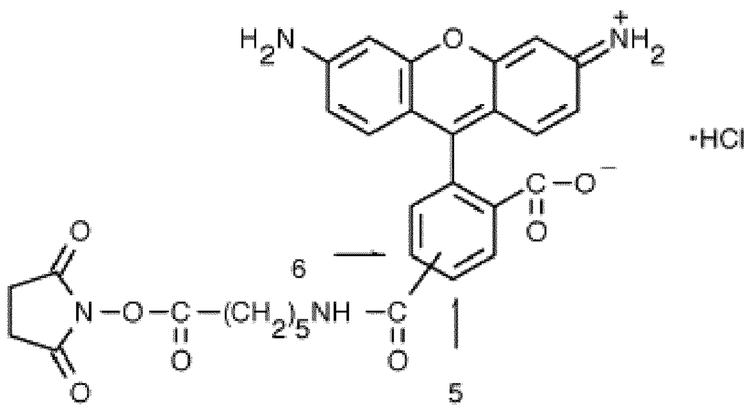 |

In einer weiteren Ausführungsform der Erfindung ist der Kalibrierfarbstoff ein ultravioletter Farbstoff vorzugsweise ausgewählt aus der Gruppe von Farbstoffen, deren Emission im Spektralbereich von 200 nm bis 425 nm liegt.

In einer Ausführungsform ist der ultraviolette Farbstoff ausgewählt aus der Gruppe aufweisend Aromatic hydrocarbons, Biomolecules, Coumarins, Heterocycles, Oligophenylens, Polycyclic aromatic hydrocarbons, Polyenes/polyynes und ähnliche.

In einer Ausführungsform der vorliegenden Erfindung ist der ultraviolette Farbstoff ausgewählt aus der Gruppe aufweisend 7-Mercapto-4-methylcoumarin, S-Methyl-7-mercapto-4-methylcoumarin, S-3-Oxobutyl-7-mercapto-4-methylcoumarin, Benzene, Toluene, o-Xylene, m-Xylene, p-Xylene, Mesitylene, Phenol, Anisole, Benzoic acid, Aniline, N,N-Dimethylaniline, Phenylboronic acid, Terephthalic acid, Biphenyl, p-Terphenyl, p-Quaterphenyl, p-Quinquephenyl, 1,3,5-Triphenylbenzene, Benzidine, 2,5-Diphenyloxazole, 1,4-Bis(5-phenyl-2-oxazolyl)benzene, (R)-BINOL, Naphthalene, Anthracene, Phenanthrene, Pyrene, Triphenylene, 9,10-Diphenylanthracene, 2,3-Diaminonaphthalene, 1,4,5,8-Naphthalenetetracarboxylic dianhydride, 1,2-Diphenylacetylene, trans-Stilbene, 1,4-Diphenylbutadiyne, 1,4-Diphenylbutadiene, 1,6-Diphenylhexatriene, 2-Methylbenzoxazole, L-Phenylalanine, L-Tyrosine, L-Tryptophan, Adenine.

In der Tabelle 3 sind einige der genannten ultravioletten Farbstoffe mit ihren Strukturformeln angegeben.

Tabelle 3: Beispiele für ultraviolette Farbstoffe

| Ultravioletter Farbstoff | Strukturformel |
|---|---|
| Phenol | 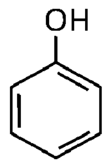 |
| Biphenyl | 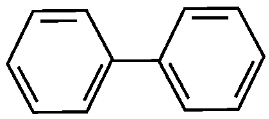 |
| Naphthalene | 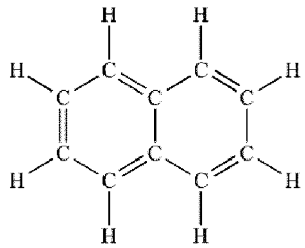 |
| 1,4-Diphenylbutadiyne | 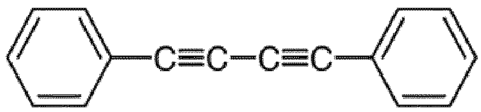 |
| 2-Methylbenzoxazole | 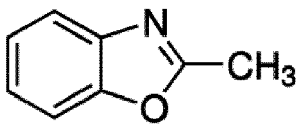 |
| L-Phenylalanine | 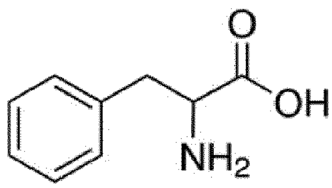 |

In einer weiteren Ausführungsform der Erfindung ist der Kalibrierfarbstoff ein grüner Farbstoff vorzugsweise ausgewählt aus der Gruppe von Farbstoffen, deren Emission im Spektralbereich von 485 nm bis 560 nm liegt.

In einer Ausführungsform ist der grüne Farbstoff ausgewählt aus der Gruppe aufweisend Acridines, Arylmethane dyes, Biomolecules, BODIPY Dyes, Chlorins/bacteriochlorins, Coumarins, Dipyrrins, Fluoresceins, Heterocycles, Oligophenylens, Perylenes, Polycyclic aromatic hydrocarbons, Polyenes/polyynes, Pyrenes, Rhodamines, Xanthenes, Stilbene und ähnliche.

In einer weiteren Ausführungsform ist der grüne Farbstoff ausgewählt aus der Gruppe aufweisend ATTO 425, 8-Amino-1,3,6-tris-(3-hydroxypropyl)-pyrene sulfone, 8-Amino-[N,N',N"-tris(2-hydroxyethyl)-N,N',N"-trimethyl]pyrene-1,3,6-trisulfonamide, 8-Methylamino-N,N',N"-tris(2-hydroxyethyl)-N,N',N"-trimethylpyrene-1,3,6-trisulfonamide, ATTO 465, ATTO 495, 1,3,5,7,8-Pentamethyl-pyrromethene fluoroborate, 1,3,5,7-Tetramethyl-pyrromethene fluoroborate, 2-Chloro-1,3,5,7,8-pentamethyl-pyrromethene fluoroborate, 8-Hydroxymethyl-2-cyano-1,3,5,7-tetramethyl-pyrromethene fluoroborate, 2-Chloro-1,3,5,7-tetramethyl-pyrromethene fluoroborate, 8-Hydroxymethyl-1,3,5,7-tetramethyl-pyrromethene fluoroborate, 8-Hydroxymethyl-2,6-dicyano-1,3,5,7-tetramethyl-pyrromethene fluoroborate, 8-Acetoxymethyl-2-cyano-1,3,5,7-tetramethyl-pyrromethene fluoroborate, 2,6-Diethyl-1,3,5,7,8-pentamethyl-pyrromethene fluoroborate, 2,6-Dichloro-1,3,5,7,8-pentamethyl-pyrromethene fluoroborate, 2,6-Diethyl-1,3,5,7-tetramethyl-pyrromethene fluoroborate, 8-Acetoxymethyl-1,3,5,7-tetramethyl-pyrromethene fluoroborate, 8-Acetoxymethyl-2,6-dicyano-1,3,5,7-tetramethyl-pyrromethene fluoroborate, 2,6-Dichloro-1,3,5,7-tetramethyl-pyrromethene fluoroborate, 8-Hydroxymethyl-2-chloro-1,3,5,7-tetramethyl-pyrromethene fluoroborate, 8-Acetoxymethyl-2-chloro-1,3,5,7-tetramethyl-pyrromethene fluoroborate, 8-Hydroxymethyl-2,6-dichloro-1,3,5,7-tetramethyl-pyrromethene fluoroborate, Fluorescein, Rhodamine 110, ATTO 488, ATTO 514, ATTO 520, ATTO 532, ATTO Rho6G, ATTO 430LS, rac-BINAP, Tetracene, Rubrene, 8-Anilino-1-naphthalenesulfonic acid, Curcumin, Thiazole orange, 7-Benzylamino-4-nitrobenz-2-oxa-1,3-diazole, Riboflavin, Coumarin 6, Acridine orange, Acridine yellow G, Acridone, Auramine O, Perylene, Fluorescein, Eosin Y, Rhodamine 123, Rhodamine 6G, Lucifer yellow CH, N,N'-Difluoroboryl-1,9-dimethyl-5-phenydipyrrin, N,N'-Difluoroboryl-1,9-dimethyl-5-(4-iodophenyl)dipyrrin, N,N'-Difluoroboryl-1,9-dimethyl-5-[(4-(2-trimethylsilylethynyl)pheny]dipyrrin, Bis(5-phenyldipyrrinato)zinc.

In der Tabelle 4 sind einige der genannten grünen Farbstoffe mit ihren Strukturformeln angegeben.

Tabelle 4: Beispiele für grüne Farbstoffe

| Grüner Farbstoff | Strukturformel |
|---|---|
| Cucurmin | 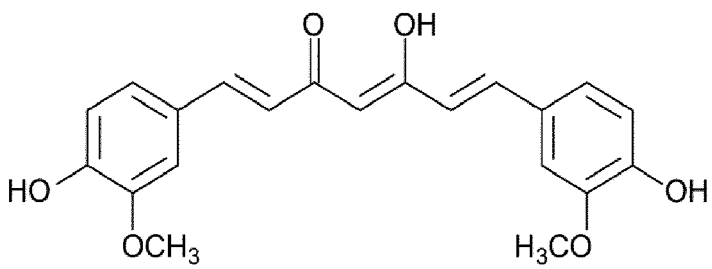 |
| 7-Benzylamino-4-nitrobenz-2-oxa-1,3-diazole | 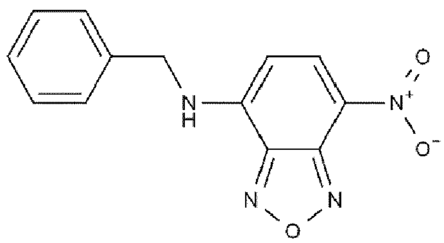 |
| Acridine yellow | 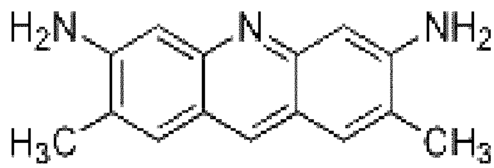 |
| Perylene | 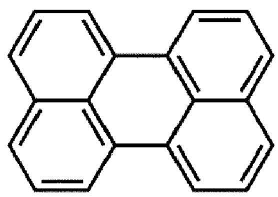 |
| Eosin Y | 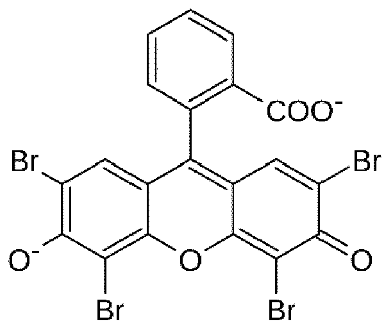 |

(fortgesetzt)

| Grüner Farbstoff | Strukturformel |
|---|---|
| N,N'-Difluoroboryl-1,9-dimethyl-5-phenydipyrrin | 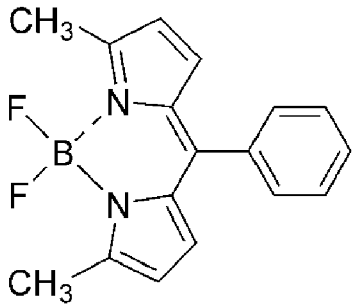 |
| CuC-1 | 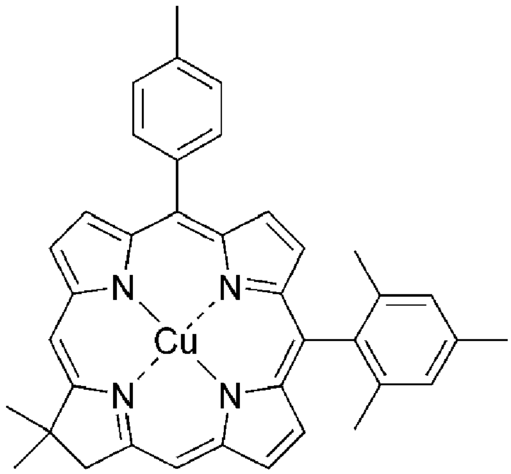 |

In einer weiteren Ausführungsform der Erfindung ist der Kalibrierfarbstoff ein gelb/oranger Farbstoff vorzugsweise ausgewählt aus der Gruppe von Farbstoffen, deren Emission im Spektralbereich von 560 nm bis 600 nm liegt.

In einer Ausführungsform ist der gelb/orange Farbstoff ausgewählt aus der Gruppe aufweisend Acridines, Arylmethane dyes, BODIPY Dyes, Cyanine dyes, Phthalocyanines, Polyenes/polyynes, Porphyrins, Pyrenes, Quinones, Rhodamines, Xanthenes, Stilbene und ähnliche.

In einer weiteren Ausführungsform ist der gelb/orange Farbstoff ausgewählt aus der Gruppe aufweisend 8-Acetoxymethyl-2,6-dichloro-1,3,5,7-tetramethyl-pyrromethene fluoroborate, PM597, Alexa Fluor 532, Janelia Fluor 549, Tetramethylrhodamine, ATTO 550, 2-(3,6-Di(pyrrolidin-1-yl)xanthylium-9-yl)benzoate, 2-(3,6-Di(azepan-1-yl)xanthylium-9-yl)benzoate, 2-(3,6-Di(piperidin-1-yl)xanthylium-9-yl)benzoate, ATTO Rho3B, ATTO 565, ATTO Rho11, ATTO 542, 4-Dimethylamino-4'-nitrostilbene, Alizarin red S, Neutral red, Nile red, Merocyanine 540, p-Fuchsin, Rose bengal, Rhodamine B, Sulforhodamine B, Rhodamine 101 inner salt, Sulforhodamine 101, MgOEP, ZnOEP, Boron subphthalocyanine chloride.

In der Tabelle 5 sind einige der genannten gelb/orangen Farbstoffe mit ihren Strukturformeln angegeben.

Tabelle 5: Beispiele für gelb/orange Farbstoffe

| Gelb/Orange Farbstoff | Strukturformel |
|---|---|
| 4-Dimethylamino-4'-nitrostilbene | 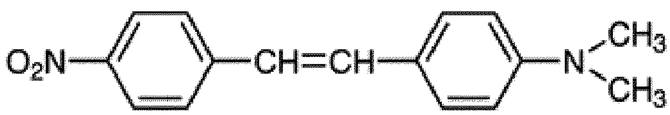 |

(fortgesetzt)

| Gelb/Orange Farbstoff | Strukturformel |
|---|---|
| Alizarin red S | 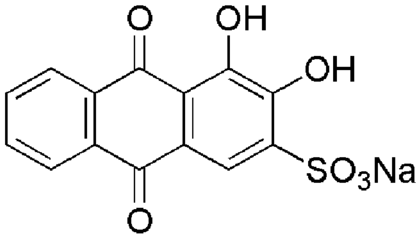 |
| Neutral red | 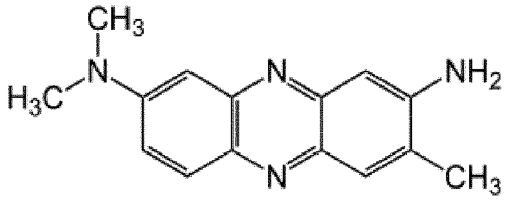 |
| Merocyanine 540 | 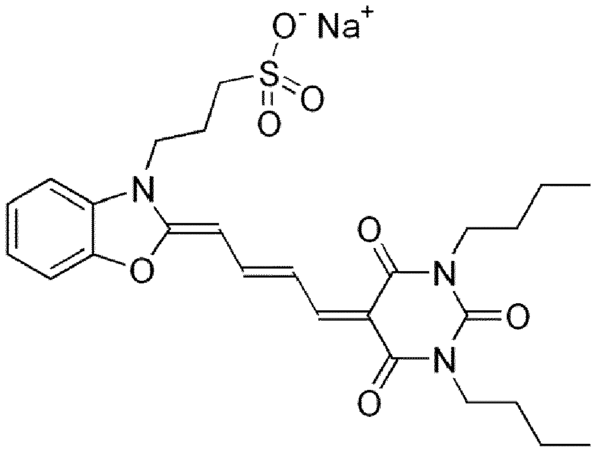 |
| Rose Bengal | 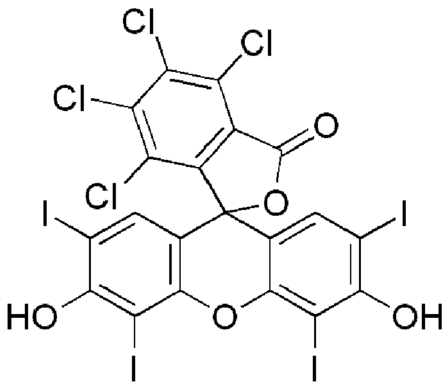 |

(fortgesetzt)

| Gelb/Orange Farbstoff | Strukturformel |
|---|---|
| Boron subphthalocyanine chloride | 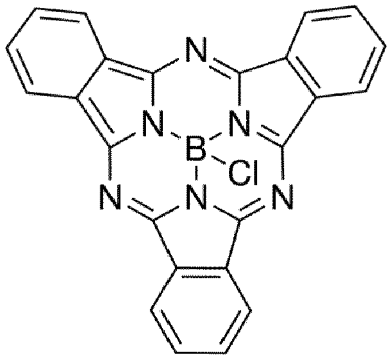 |

In einer weiteren Ausführungsform der Erfindung ist der Kalibrierfarbstoff ein infraroter Farbstoff vorzugsweise ausgewählt aus der Gruppe von Farbstoffen, deren Emission im Spektralbereich von 780 nm bis 900 nm liegt.

In einer Ausführungsform ist der infrarote Farbstoff ausgewählt aus der Gruppe aufweisend Cyanine dyes, Phthalocyanines und ähnliche.

In einer weiteren Ausführungsform ist der infrarote Farbstoff ausgewählt aus der Gruppe aufweisend Alexa Fluor 750, 1,1'-Diethyl-3,3,3',3'-tetramethylindotricarbocyanine lodide, Indocyanine green, H2Nc(tBu).

In der Tabelle 6 sind einige der genannten infraroten Farbstoffe mit ihren Strukturformeln angegeben.

Tabelle 6: Beispiele für infrarote Farbstoffe

| Infraroter Farbstoff | Strukturformel |
|---|---|
| 1,1'-Diethyl-3,3,3',3'-tetramethylindotricarbocyanine lodide | 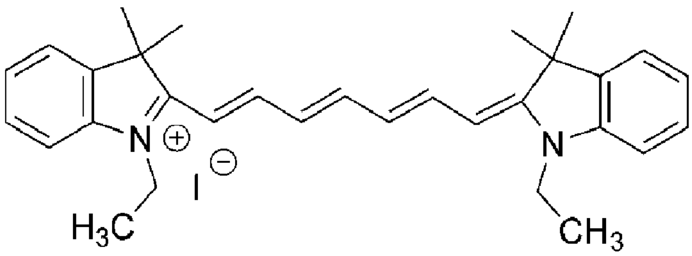 |
| Indocyanine green | 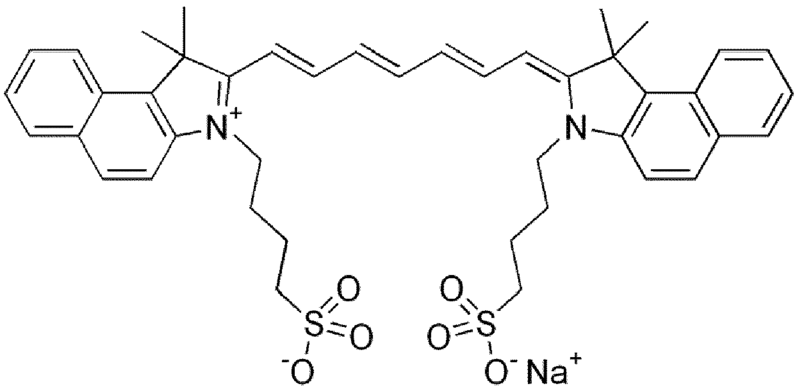 |

(fortgesetzt)

| Infraroter Farbstoff | Strukturformel |
|---|---|
| H2Nc(tBu) | 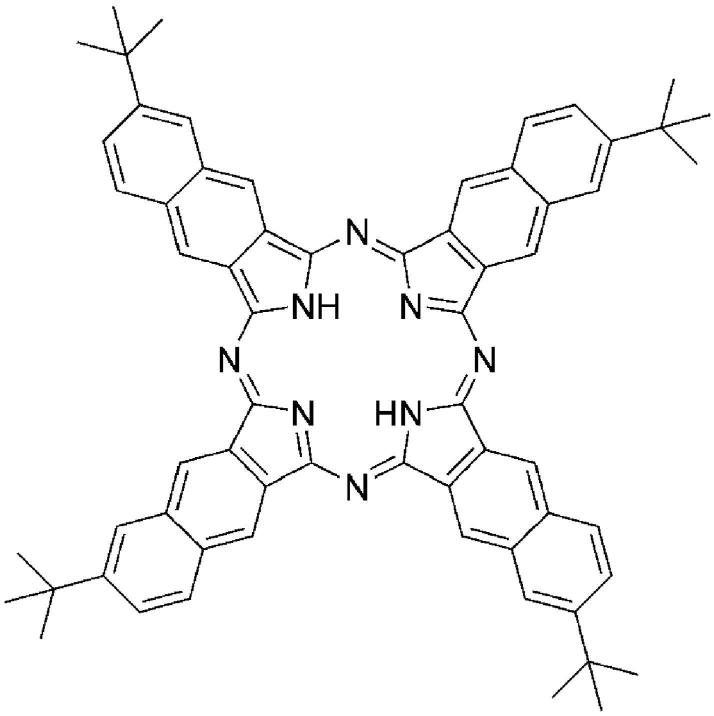 |

In einem Verfahrensschritt wird der mindestens eine Kalibrierfarbstoff mit Hilfe einer kalibrierten oder geeichten Feinwaage eingewogen. Durch die Verwendung einer kalibrierten oder geeichten Feinwaage ist eine hochpräzise Einwaage des mindestens einen Kalibrierfarbstoffes sichergestellt. Darüber hinaus ist die Messunsicherheit genau bekannt.

Anschließend wird durch die Zugabe eines Lösungsmittels oder einer Polymerlösung bekannter Masse eine Stammlösung der Kalibrierzusammensetzung hergestellt.

Weist die Kalibrierzusammensetzung ein Lösungsmittel auf, so ist das Lösungsmittel bevorzugt ein organisches oder ein anorganisches Lösungsmittel. Die Wahl des geeigneten Lösungsmittels unterliegt dabei verschiedenen Kriterien.

Das Lösungsmittel muss unter anderem danach ausgewählt werden, welche Probenbehälter bei der Fluoreszenzspektroskopie zum Einsatz kommen. Einige Polymerchips, die hierfür verwendet werden, sind nicht beständig gegenüber organischen Lösungsmitteln, so dass in diesem Fall ein anorganisches Lösungsmittel verwendet werden muss. Geeignete anorganische Lösungsmittel sind beispielsweise wässrige Pufferlösungen. Werden hingegen Probenbehälter aus Materialien wie z.B. Glas oder Polymeren verwendet, die beständig gegenüber organischen Lösungsmitteln sind, können auch organische Lösemittel verwendet werden. In einer Ausführungsform der vorliegenden Erfindung werden Ethanol oder Methanol als organische Lösungsmittel verwendet. Das Kriterium der Wasserlöslichkeit der Kalibrierfarbstoffe ist daher erfindungsgemäß nicht zwingend erforderlich.

Geeignete wasserlösliche Lösungsmittel können beispielsweise wässrige Pufferlösungen oder Wasser sein.

Das Lösungsmittel wird besonders bevorzugt mit einer kalibrierten Pipette zu dem mindestens einen Kalibrierfarbstoff zugegeben, so dass über das Volumen, die Masse des zugegebenen Lösungsmittels präzise bekannt ist. Ebenso ist die Messunsicherheit bezüglich des Volumens bzw. der Masse des zugegebenen Lösungsmittels bekannt.

In einer weiteren Ausführungsform der Erfindung kann statt eines Lösungsmittels auch eine Polymerlösung zu dem mindestens einen Kalibrierfarbstoff zugegeben werden. Geeignete Polymere sind beispielsweise Silikon und Epoxidharz. Die Polymere werden im Allgemeinen in einem organischen Lösungsmittel gelöst, um eine Polymerlösung zur Verfügung zu stellen. Zur Herstellung einer solchen Polymerlösung wird die Einwaage mittels einer geeichten oder kalibrierten Feinwaage vorgenommen, das Lösungsmittel wird wiederum mit einer kalibrierten Pipette zugegeben. Auf diese Weise ist sowohl die Masse des Polymers als auch die Masse des Lösungsmittels mit samt der zugehörigen Messunsicherheit präzise bekannt.

In einer weiteren Ausführungsform liegt der Kalibrierfarbstoff als fluoreszenter Nanopartikel vor, dieser wird bevorzugt in einem Lösungsmittel oder in einer Polymerlösung dispergiert.

Liegt die Kalibrierzusammensetzung als flüssige Lösung vor, hat dies den Vorteil, dass bei der Belichtung photochemisch zersetzte Moleküle nachdiffundieren können und lokale Ausbleicheffekte vermieden werden können.

In einer Ausführungsform der vorliegenden Erfindung weist die Kalibrierzusammensetzung eine aushärtbare Polymerlösung auf. Ein Vorteil von Kalibrierzusammensetzungen, die eine aushärtbare Polymerlösung aufweisen, ist, dass sie in die für die Probe eingesetzten Messbehältnisse wie Küvetten, Mikrotiterplatten, Chips, Mikrokanalsysteme oder andere Gefäße eingefüllt und anschließend ausgehärtet werden können.

In einer weiteren Ausführungsform ist der Kalibrierfarbstoff ein Farbstoff-dotiertes oder Farbstoff-beladenes Polymer-System, welchem in einer bevorzugten Ausführungsform ein Lösungsmittel gemäß dem erfindungsgemäßen Verfahren zugegeben wird. Diese Lösung wird in einer weiterhin bevorzugten Ausführungsform in ein Messbehältnis eingefüllt und in diesem ausgehärtet bzw. polymerisiert.

In einer Ausführungsform weist das erfindungsgemäße Verfahren daher zusätzlich den Schritt des Aushärtens der Kalibrierzusammensetzung auf.

Im erfindungsgemäßen Verfahren wird für die Kalibrierzusammensetzung eine Verdünnungsreihe mit bekannten Konzentrationen des mindestens einen Kalibrierfarbstoffs hergestellt. Hierfür wird bevorzugt die Stammlösung der Kalibrierzusammensetzung schrittweise durch die Zugabe eines Lösungsmittels verdünnt. Die Zugabe des Lösungsmittels wird wiederum mit einer kalibrierten Pipette durchgeführt, so dass die Masse des zugegebenen Lösungsmittels und die dazugehörige Messunsicherheit präzise bekannt sind. Für eine qualitativ hochwertige Kalibrierung sollte die Verdünnungsreihe aus Kalibrierzusammensetzungen mit mindestens zwei verschiedenen Konzentrationen des mindestens einen Kalibrierfarbstoffs bestehen. Prinzipiell kann die Verdünnungsreihe aus beliebig vielen verschiedenen Konzentrationen des mindestens einen Kalibrierfarbstoffs bestehen. In einer Ausführungsform der vorliegenden Erfindung besteht die Verdünnungsreihe aus 2 bis 10 verschiedenen Konzentrationen des mindestens einen Kalibrierfarbstoffs, bevorzugt aus 2 bis 8 verschiedenen Konzentrationen des mindestens einen Kalibrierfarbstoffs, besonders bevorzugt aus 3 verschiedenen Konzentrationen des mindestens einen Kalibrierfarbstoffs.

Erfindungsgemäß wird jeweils ein definiertes Volumen der Kalibrierzusammensetzung in ein Messbehältnis mit einer kalibrierten Pipette eingefüllt und optional ausgehärtet. Geeignete Messbehältnisse sind wie bereits erwähnt Küvetten, Mikrotiterplatten, Chips, Mikrokanalsysteme oder andere Gefäße.

Das Emissions- und das Absorptionsspektrum der Kalibrierzusammensetzung werden für jede Konzentration der Verdünnungsreihe der Kalibrierzusammensetzung in dem Fluoreszenzmessgerät und in einem Absorptionsmessgerät gemessen.

Aus den gemessenen Absorptionsspektren wird die Absorption A des mindesten einen Kalibrierfarbstoffes für jede Konzentration des mindestens einen Kalibrierfarbstoffs der Verdünnungsreihe ermittelt und hieraus nach Formel (1) die Extinktion E berechnet. Aus der Extinktion E wird der molare Extinktionskoeffizienten ε des mindestens einen Kalibrierfarbstoffs nach Formel (2) berechnet. Bevorzugt werden die Absorptionsspektren im Zuge der Auswertung Lösungsmittel- und Basislinienkorrigiert.

$$A(\lambda_{ex}) = 1\text{-}10^{-E(\lambda ex)} \qquad (1)$$

$$\epsilon = \frac{E}{c\,d} \qquad (2)$$

Der molare Extinktionskoeffizient ε wird gemäß der Formel (2) aus der Extinktion E, der Konzentration des Kalibrierfarbstoffs c und der Schichtdicke *d* des Messbehältnisses berechnet. *E* ist die dimensionslose Extinktion, d. h. die Verminderung der Intensität des im Fluoreszenzmessgerät gemessenen Lichtes und wird aus dem Absorptionsspektrum bestimmt. Dieses Vorgehen ist dem Fachmann vertraut.

Weiterhin wird die integrale Fluoreszenzintensität für jede Konzentration des mindestens einen Kalibrierfarbstoffs der Verdünnungsreihe aus den Emissionsspektren ermittelt. Hierfür wir das Integral unter dem Emissionsspektrum ermittelt. Dieses Vorgehen ist dem Fachmann ebenfalls geläufig.

Bei höheren Konzentrationen von Kalibrierfarbstoffen kann es dazu kommen, dass emittierte Photonen reabsorbiert werden. Dies führt zu einer Unterschätzung der Fluoreszenzintensität bzw. der Zahl der emittierten Photonen im Spektralbereich der kurzwelligen Flanke des Emissionsspektrums. Dies führt auch zu einer Rotverschiebung der Emissionsspektren. Um die Beiträge von Reabsorptionseffekten bei der Angabe der integralen Fluoreszenzintensität zu minimieren, wird in einer bevorzugten Ausführungsform des Verfahrens das Flächenintegral der Emissionsbande nur in einem Spektralbereich erfasst, in dem keine Überlappung zwischen Absorption und Emission auftritt oder die Überlappung von Absorption und Emission möglichst gering ist.

Der Wellenlängenbereich, in dem der mindestens eine Kalibrierfarbstoff der Kalibrierzusammensetzung emittiert, sollte überlappen mit dem Detektionsbereich der verwendeten Filter und Photodioden des Fluoreszenzmessgerätes. Der Überlapp sollte idealerweise möglichst groß sein, um das Emissionsspektrum des mindestens einen Kalibrierfarbstoffs gut detektieren zu können.

Besonders bevorzugt ist es, wenn die Photolumineszenzquantenausbeute des mindestens einen Kalibrierfarbstoffes möglichst hoch ist, um ein gutes Signal-/Rausch-Verhältnis am Photodetektor im Fluoreszenzmessgerät zu erzielen.

Bevorzugt weist der mindestens eine Kalibrierfarbstoff eine sehr gute thermische und photochemische Stabilität und eine sehr geringe Temperaturabhängigkeit der optischen Eigenschaften, insbesondere der Fluoreszenzquantenausbeute, im für die Probe eingesetzten Temperaturbereich auf.

Weiterhin bevorzugt ist es, wenn der mindestens eine Kalibrierfarbstoff eine geringe, besonders bevorzugt keine Aggregation in dem Lösungsmittel oder in der Polymerlösung der Kalibrierzusammensetzung aufweist.

Darüber hinaus ist eine Adsorption an den Wänden des zur Messung eingesetzten Messbehälters unerwünscht. In einer Ausführungsform der vorliegenden Erfindung zeigt der mindestens eine Kalibrierfarbstoff keine oder nur eine vernachlässigbar geringe Adsorption an den Wänden des eingesetzten Messbehälters. Vernachlässigbar gering bedeutet in diesem Zusammenhang, dass der Effekt keinen messbaren Einfluss auf die Messergebnisse hat.

Das erfindungsgemäße Verfahren erfolgt im Linearitätsbereich des Detektionssystems des Fluoreszenzmessgerätes. Dieses muss daher im Vorfeld bekannt sein. In einer Ausführungsform der vorliegenden Erfindung wird daher der Linearitätsbereich des Detektionssystems bestimmt und das erfindungsgemäße Verfahren innerhalb dieses Linearitätsbereiches angewendet. Wie dem Fachmann bekannt ist, ist der Linearitätsbereich der Bereich des Detektors, in dem dieser linear Fluoreszenzintensitäten anzeigt.

Schwankungen der Anregungsleistungsintensität z.B. durch Fluktuationen der Lichtquelle des Fluoreszenzmessgerätes werden entweder durch einen Referenzkanal erfasst (Ausgabe des Messsignals als Quotient der Signale des Emissionsdetektionssystems und des Referenzdetektors) oder bei Geräten ohne separaten Referenzdetektor durch die Referenzierung auf das Signal eines unter konstanten Messbedingungen ermittelten Farbstoffes erfasst. Diese Referenzierung kann mittels eines Referenzfarbstoffes durchgeführt werden, der eine bekannte und/oder konstante Signalintensität aufweist. Der Referenzfarbstoff kann beispielsweise in einer PCR-Platte oder Mikrotiterplatte vorliegen. Alternativ kann auch eine streuende Lösung oder ein Streuer verwendet werden, dessen Messignal von der Anregungsintensität abhängt. Beide Varianten sind aus dem Stand der Technik bekannt.

Erfindungsgemäß kann jeder Konzentration der Kalibrierzusammensetzung ein molarer Extinktionskoeffizient $\varepsilon$ und eine integrale Fluoreszenzintensität zugeordnet werden. Aufgrund der Einwaage des mindestens einen Kalibrierfarbstoffes und optional eines Polymers mit einer kalibrierten oder geeichten Feinwaage und der Nutzung von kalibrierten Pipetten bei der Zugabe von Lösungsmitteln ist die Konzentration des Kalibrierfarbstoffes im Messbehältnis genau bekannt. Ist das Volumen im Messbehältnis bekannt, so kann die integrale Fluoreszenzintensität darauf zurückgeführt werden, wieviel Gramm oder Mol des Kalibrierfarbstoffes die gemessene integrale Fluoreszenzintensität in dem Fluoreszenzmessgerät hervorrufen, womit eine rückführbare Kalibrierung des Fluoreszenzmessgerätes zur Verfügung steht.

Wird das erfindungsgemäße Verfahren in zeitlichen Abständen mit der gleichen Kalibrierzusammensetzung mit dem gleichen Fluoreszenzmessgerät unter vergleichbaren Messbedingungen durchgeführt, sollte die gemessene integrale Fluoreszenzintensität für eine Konzentration der Kalibrierzusammensetzung innerhalb der Messtoleranz immer gleichbleiben. Vergleichbare Messbedingungen bedeuten dabei, dass alle Messbedingungen, die Einfluss auf das Messsignal haben können gleich sind. Dies sind insbesondere die Temperatur, die Messgeometrie, die optischen Komponenten des Fluoreszenzmessgerätes und die Anregungswellenlänge. Die gerätespezifischen Einflussgrößen wie der spektrale Photonenfluss bei der Anregungswellenlänge $\lambda_{ex}$ am Probenort und die spektrale Empfindlichkeit $s(\lambda_{em})$ des Detektionssystems sollten damit im idealen Fall unverändert zu früheren Messungen sein. Treten Abweichungen bei der Kalibriermessung auf, die außerhalb der Messtoleranz liegen, deutet dies darauf hin, dass sich die gerätespezifischen Eigenschaften des verwendeten Fluoreszenzmessgerätes verändert haben.

Das erfindungsgemäße Verfahren kann daher vorteilhafterweise genutzt werden, um die Gerätefunktionalität eines Fluoreszenzmessgerätes zu prüfen und in zeitlichen Abständen zu überwachen. Dies ist besonders bedeutend für die Qualitätssicherung darauffolgender Messung mit anderen Proben. Ein fehlerhaft arbeitendes Fluoreszenzmessgerät und damit verbundene veränderte gerätespezifische Einflüsse auf das Messsignal können auf diese Weise ausgeschlossen werden.

Weiterhin vorteilhaft ist, dass das erfindungsgemäße Verfahren genutzt werden kann, um verschiedene Fluoreszenzmessgeräte untereinander rückführbar zu referenzieren. Durch die Anwendung des erfindungsgemäßen Verfahrens mit gleichen Kalibrierzusammensetzungen, gleicher Konzentrationen in verschiedenen Fluoreszenzmessgeräten, können die jeweils ermittelten integralen Fluoreszenzintensitäten miteinander verglichen und die Geräte aufeinander referenziert werden. Die Referenzierung beinhaltet dabei immer inhärent die gerätespezifischen Eigenschaften der jeweils verwendeten Fluoreszenzmessgeräte. Durch das erfindungsgemäße Verfahren ist es daher möglich Messungen in verschiedenen Fluoreszenzmessgeräten untereinander vergleichbar zu machen.

Ein weiteres Einsatzgebiet bietet auch die Produktionskontrolle von Fluoreszenzspektrometern. Gerätehersteller haben das Ziel, das die von Ihnen hergestellten Fluoreszenzmessgeräte immer eine ähnliche Geräteperformance zeigen. Da jedoch schon die optischen Bauteile eines Fluoreszenzspektrometers nicht exakt die gleichen optischen Eigenschaften zeigen, kann es zu Schwankungen in den gerätespezifischen Eigenschaften verschiedener Fluoreszenzspektrometern kommen. Durch das erfindungsgemäße Verfahren kann nun nach der Fertigung von Fluoreszenzmessgeräten der Einfluss der gerätespezifischen Eigenschaften auf das Fluoreszenzsignal ermittelt werden. Somit ist es möglich die Qualität der Fluoreszenzmessgeräte zu beurteilen und damit eine möglichst hohe Qualität in der Fertigung zu gewährleiten.

Das erfindungsgemäße Verfahren realisiert eine rückführbare und reproduzierbare Kalibrierkette. Dabei wird ausgenutzt, dass sich Einwaagen, beispielsweise des mindestens einen Kalibrierfarbstoffes, selbst im Bereich von wenigen Milligramm mit einer sehr hohen Präzision und Genauigkeit mit einer entsprechend präzisen kalibrierten oder geeichten Feinwaage durchführen lassen. Die Rückführbarkeit und Reproduzierbarkeit der erfindungsgemäßen Kalibrierkette wird damit durch die Anbindung an die SI-Einheiten Masse oder Mol realisiert. Bei der Verwendung von Lösungsmitteln lassen sich die Unsicherheiten von definiert angesetzten Verdünnungsreihen mit kalibrierten Pipetten einfach über eine gravimetrische oder photometrische Kontrolle ermitteln. Für die gravimetrische Kontrolle erfolgt die Herstellung der Lösungen und der Verdünnungsreihen, indem die Herstellung direkt auf einer kalibrierten Waage erfolgt. Für die photometrische Kontrolle wird ein kalibriertes Absorptionsspektrometer verwendet und es erfolgt die Kontrolle über die Messung von Absorptionsspektren (auch in Küvetten unterschiedlicher und genau bekannter Schichtdicke) und über zuvor ermittelte Extinktionskoeffizienten. Für die Bestimmung der Extinktionskoeffizienten werden definierte Einwaagen verwendet. Unter Nutzung einer kalibrierten oder geeichten Feinwaage und kalibrierter Pipetten erfolgt die Herstellung von Lösungen über eine gravimetrische Kontrolle wie zuvor beschrieben. Damit werden alle Voraussetzungen für die Aufstellung einer lückenlosen Messunsicherheitsbilanz, wie sie für eine nach ISO/EN 17025 geforderten Rückführung aus SI-Einheiten notwendig ist, in dem erfindungsgemäßen Verfahren erfüllt.

In einer weiteren Ausführungsform der Erfindung weist das Verfahren zusätzlich die Schritte

- Bereitstellen einer Probe aufweisend mindestens einen Fluoreszenzmarker;
- Messen mindestens eines Absorptionsspektrums der Probe in einem Absorptionsspektrometer und Berechnung des molaren Extinktionskoeffizienten aus der gemessenen Extinktion;
- Messen mindestens eines Emissionsspektrums der Probe in dem Fluoreszenzmessgerät unter den gleichen Messbedingungen, wie die Emissionsspektren jede Konzentration der Verdünnungsreihe der Kalibrierzusammensetzung gemessen wurden;
- Berechnung der integralen Fluoreszenzintensität der Probe aus dem Emissionsspektrum;
- Zuordnung der integralen Fluoreszenzintensität des mindestens einen Emissionsspektrums der Probe zur integralen Fluoreszenzintensität einer Konzentration der Kalibrierzusammensetzung;

wobei die spektralen Eigenschaften der Kalibrierzusammensetzung auf den mindestens einen Fluoreszenzmarker der Probe angepasst sind.

In dieser Ausführungsform ist das erfindungsgemäße Verfahren dazu geeignet, die Fluoreszenzmessung einer Probe, die mindestens einen Fluoreszenzmarker aufweist, rückführbar zu referenzieren.

In dieser Ausführungsform wird eine Probe bereitgestellt, die mindestens einen Fluoreszenzmarker aufweist. Geeignete Proben im Sinne der vorliegenden Erfindung sind Fluoreszenzassays und/oder andere Kalibrierobjekte. Die Proben weisen erfindungsgemäß mindestens einen Fluoreszenzmarker auf.

Fluoreszenzassays basieren auf Fluoreszenzmessungen und sind dem Fachmann als solche gut bekannt. Beispiele hierfür sind DNA- bzw. PCR-basierten COVID-19 Fluoreszenzassays und Fluoreszenzassays für andere krankheitsspezifische Biomarker. Krankheitsbasierte Biomarker können beispielsweise krebstypische Biomarker wie Her2/Neu, Biomarker für Entzündungen wie CRP, Biomarker für Autoimmunerkrankungen und ähnliche sein.

Andere Kalibrierobjekte können zum Beispiel weitere Kalibrierlösungen sein. In einer Ausführungsform ist hierfür eine Kalibrierlösung geeignet die einer Kalibrierzusammensetzung entspricht, wie sie in der vorliegenden Erfindung beschrieben ist. In einer weiteren Ausführungsform der Erfindung können die anderen Kalibrierobjekte ausgewählt sein aus einer Gruppe aufweisend dotierten Polymersystemen, mit einem Farbstoff versehenen Polymersystemen und fluoreszente Gläser.

Die Probe weist erfindungsgemäß mindestens einen Fluoreszenzmarker auf. In einer Ausführungsform der vorliegenden Erfindung ist der mindestens eine Fluoreszenzmarker der Probe ausgewählt aus der Gruppe aufweisend blaue Farbstoffe, deren Emissionsbereich im Spektralbereich zwischen 425 nm und 485 nm liegt und rote Farbstoffe, deren Emissionsbereich im Spektralbereich zwischen 600 nm und 780 nm liegt. Farbstoffe, die diese Bedingungen erfüllen, wurden bereits bezüglich der Kalibrierfarbstoffe beschrieben. In einer Ausführungsform ist der mindestens eine Fluoreszenzmarker in der Probe ausgewählt aus der Gruppe aufweisen FAM und ATTO 647N, deren Strukturformeln in der Tabelle 7 angegeben sind. Diese können vorteilhafterweise beispielsweise in einem DNA- bzw. PCR-basierten COVID-19 Fluoreszenzassay verwendet werden.

Tabelle 7: Beispiele für Fluoreszenzmarker

| Fluoreszenzmarker | Strukturformel |
|---|---|
| FAM | 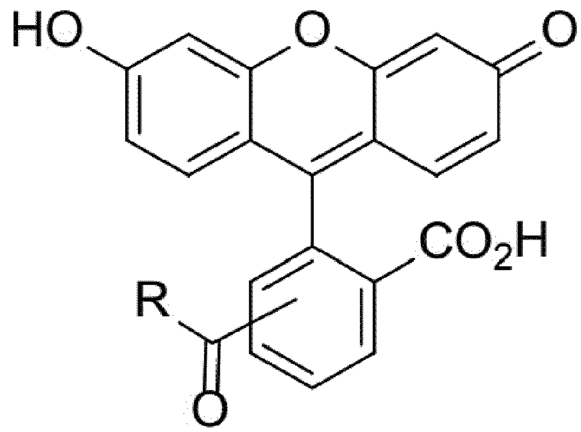 |
| ATTO 647N | 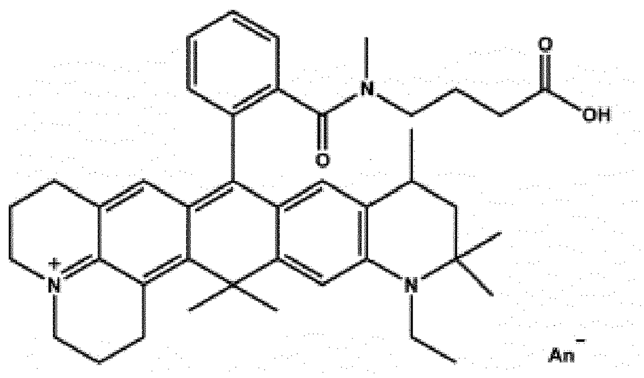 |

In einer weiteren Ausführungsform der Erfindung kann die Probe auch mehrere Fluoreszenzmarker aufweisen. In einer Ausführungsform der Erfindung weist die Probe 2 bis 5 Fluoreszenzmarker, bevorzugt 2 bis 3 Fluoreszenzmarker auf, wobei sich die einzelnen Fluoreszenzmarker spektral unterscheiden lassen müssen. Spektral unterscheiden lassen sich diese, wenn deren Messsignale voneinander getrennt werden können.

Erfindungsgemäß wird mindestens ein Absorptionsspektrums der Probe in einem Absorptionsspektrometer gemessen und der molare Extinktionskoeffizient aus der gemessenen Absorption nach Formel (1) und (2) berechnet.

Darüber hinaus wird mindestens ein Emissionsspektrum der Probe in dem Fluoreszenzmessgerät unter den gleichen Messbedingungen gemessen, unter denen die Emissionsspektren jeder Konzentration der Verdünnungsreihe der Kalibrierzusammensetzung gemessen wurden. Gleiche Messbedingungen bedeuten dabei, dass alle Messbedingungen, die Einfluss auf das Messsignal haben können gleich sind. Dies sind insbesondere die Temperatur und darüber hinaus die Messgeometrie, die optischen Komponenten des Fluoreszenzmessgerätes und die Anregungswellenlänge. Die Messgeometrie bezeichnet den Aufbau des optischen Strahlengangs im Messgerät.

Alle Messungen der Probe und der Kalibrierzusammensetzung werden in demselben Absorptionsspektrometer und Fluoreszenzmessgerät durchgeführt.

Für eine möglichst probennahe und zuverlässige Referenzierung bzw. Gerätekalibrierung, Gerätefunktionsprüfung und einen Geräteabgleich sollten die Kalibrier-, Überprüfungs- und Kontrollmessungen mit dem erfindungsgemäßen Verfahren unter möglichst ähnlichen Bedingungen wie die Messungen mit den Proben erfolgen. Dies umfasst die eingesetzten Geräteparameter im Anregungs- und Detektionskanal, die eingesetzte Messgeometrie und idealerweise auch die verwendeten Messbehältnisse.

Die Messung der Absorptions- und Emissionsspektren der Probe und der Kalibrierzusammensetzung werden daher bevorzugt mit denselben Geräteparameter, derselben Messgeometrie und optional derselben Art von Messbehältnis durchgeführt. In einer besonders bevorzugten Ausführungsform wird die gleiche Art von Messbehältnis verwendet.

Sämtliche gerätespezifische Einflussgrößen, insbesondere der spektrale Photonenfluss bei der Anregungswellenlänge $\lambda_{ex}$ am Probenort und die spektrale Empfindlichkeit $s(\lambda_{em})$ des Detektionssystems sind damit bei allen Messungen gleich.

Gerade die Fluoreszenzmessungen mit Readersystemen als Fluoreszenzmessgerät erfolgt oft in einer Front-Face-Geometrie, hier kann der Meniskus der vermessenen Proben oder Kalibrierzusammensetzungen im Messbehältnis

die Messung beeinflussen. Der Meniskus hängt dabei von dem Material der Messbehältnisse (Polymersysteme, Glas etc.) und deren Benetzungsverhalten ab sowie von der Zusammensetzung des eingesetzten Lösungsmittels oder Polymers. Für eine möglichst gute Anpassung von Probe und Kalibrierzusammensetzung sollten daher entweder dieselben Lösungsmittel oder Polymerlösungen in der Probe und in der Kalibrierzusammensetzung verwendet werden oder das Lösungsmittel bzw. die Polymerlösung der Kalibrierzusammensetzung muss so gewählt werden, dass sich die Menisken von Probe und Kalibrierzusammensetzung möglichst ähnlich sind. Organische Lösungsmittel wie Ethanol haben hier oft den Vorteil, dass sie einen glatteren Meniskus liefern als einige wässrige Lösungsmittel wie einige bioanalytisch relevante wässrige Puffer.

In einer Ausführungsform der Erfindung weist die Probe das gleiche Lösungsmittel oder die gleiche Polymerlösung wie die Kalibrierzusammensetzung auf.

Durch die Zugabe von Tensiden kann der Meniskus im Messbehältnis derart beeinflusst werden, dass der Meniskus der Kalibrierzusammensetzung an den Meniskus der Probe angepasst wird. Zu beachten ist hierbei, dass das mindestens eine Tensid die kalibrierrelevanten spektralen Eigenschaften des mindestens einen Kalibrierfarbstoffs nicht deutlich verändert. Geeignete Tenside sind beispielsweise anionische Tenside wie SDS (Natriumdodecylsulfat), kationische Tenside wie CTAB (Cetyltrimethylammoniumbromid), neutrale Tenside, PEG-Systeme, Proteine wie beispielsweise BSA, Mizellenbildner. Das mindestens eine Tensid wird dabei danach ausgewählt, dass sich möglichste kein Meniskus mehr zeigt und damit keine deutlichen Randeffekte mehr auftreten. Die Oberfläche sollte möglichst planar erscheinen.

In einer Ausführungsform der vorliegenden Erfindung wird bei der Herstellung der Kalibrierzusammensetzung dieser daher mindestens ein Tensid bekannter Masse zugegeben.

Wird ein Tensid zugegeben, so geschieht dies mit einer kalibrierten Pipette, so dass das zugegebene Volumen und damit die Masse des Tensids präzise bekannt sind. Ebenso ist die Messunsicherheit des Volumens und damit der Masse bekannt.

In einer weiteren Ausführungsform der Erfindung wird der Randeffekt, der durch den Meniskus entsteht durch eine Maske ausgeblendet bzw. abgedeckt.

Wesentlich für das vorliegende Verfahren und die Güte der damit verbundenen Kalibrierung ist, dass die spektralen Eigenschaften der Kalibrierzusammensetzung auf den mindestens einen Fluoreszenzmarker der Probe angepasst sind.

Insbesondere die Lage des Emissionsspektrums des mindestens einen Kalibrierfarbstoffes in der Kalibrierzusammensetzung sollte erfindungsgemäß auf das Emissionsspektrum des in der Probe eingesetzten mindestens einen Fluoreszenzmarker angepasst sein. Das heißt, dass das Emissionsspektrum des mindestens einen Kalibrierfarbstoffs in der Kalibrierzusammensetzung mit dem Emissionsspektrum mindestens eines Fluoreszenzmarkers in der Probe erfindungsgemäß überlappt. Bevorzugt sollte die Überlappung der beiden Emissionsspektren so groß wie möglich sein. Eine möglichst große Überlappung trägt zu einer größeren Güte der Kalibrierung bei.

Dabei ist zu beachten, dass die optischen Eigenschaften von Kalibrierfarbstoffen wie die spektrale Lage und Form der Absorptions- und Emissionsspektren, die Intensitätsparameter wie molarer Extinktionskoeffizienten und die Fluoreszenzquantenausbeuten von ihrer Umgebung abhängig sind. Das Lösungsmittel oder die Polymerlösung in der Kalibrierzusammensetzung nehmen demnach Einfluss auf die spektralen Eigenschaften des mindestens einen Kalibrierfarbstoffes in der Kalibrierzusammensetzung. Daher müssen erfindungsgemäß die spektralen Eigenschaften des mindestens einen Kalibrierfarbstoffes in Abhängigkeit von den restlichen Komponenten der Kalibrierzusammensetzung betrachtet werden. Dies bietet jedoch auch die Möglichkeit die spektralen Eigenschaften des mindestens einen Kalibrierfarbstoffs in der Kalibrierzusammensetzung durch die Zugabe bestimmter Lösungsmittel oder Polymerlösungen in einer gewünschten Weise günstig zu beeinflussen. Über die Messung des Absorptionsspektrums können die spektralen Eigenschaften der Kalibrierzusammensetzung und auch der Probe wie bereits beschrieben bestimmte werden.

In einer Ausführungsform der Erfindung wird daher ein Lösungsmittel oder eine Polymerlösung und optional ein Tensid für die Herstellung der Kalibrierzusammensetzung derart ausgewählt, dass die spektralen Eigenschaften des mindestens einen Kalibrierfarbstoffes in der Kalibrierzusammensetzung, insbesondere die Lage des Emissionsspektrums und/oder die Intensitätsparameter günstig beeinflusst werden. Günstig bedeutet in diesem Zusammenhang, dass die spektralen Eigenschaften, also die Lage und Form der Emissionsspektren, von Probe und Standard möglichst ähnlich sein sollte und idealerweise identisch ist.

Darüber hinaus muss die Fluoreszenz des mindestens einen Kalibrierfarbstoffs bei derselben Wellenlänge anregbar sein, wie die Fluoreszenz des mindestens einen Fluoreszenzmarkers der Probe. Weiterhin muss die Anregungswellenlänge für einen Kanal des Fluoreszenzspektrometers innerhalb des Absorptionsspektrums des mindestens einen Kalibrierfarbstoffs liegen und sollte darüber hinaus spektral getrennt vom Detektionsfenster sein.

In einer Ausführungsform des erfindungsgemäßen Verfahrens wird die Fluoreszenz des mindestens einen Kalibrierfarbstoffs bei derselben Wellenlänge angeregt, wie die Fluoreszenz mindestens eines Fluoreszenzmarkers der Probe und das Emissionsspektrum des mindestens einen Kalibrierfarbstoffs überlappt mit dem Emissionsspektrum mindestens eines Fluoreszenzmarkers der Probe.

Die Komponenten der Kalibrierzusammensetzung (Kalibrierfarbstoff, Lösungsmittel, Polymerlösung, Tensid) werden daher immer spezifisch auf den mindestens einen Fluoreszenzmarker der Probe abgestimmt, um die beschriebenen Bedingungen zu erfüllen.

In dieser Ausführungsform wird die integrale Fluoreszenzintensität der Probe aus dem Emissionsspektrum bestimmt. Der integralen Fluoreszenzintensität des mindestens einen Emissionsspektrums der Probe wird dann eine integrale Fluoreszenzintensität einer Konzentration der Kalibrierzusammensetzung zugeordnet.

Das heißt, gemäß dem vorliegenden Verfahren wird mindestens ein Emissionsspektrum einer Probe gemessen und daraus die integrale Fluoreszenzintensität der Probe unter den verwendeten Messbedingungen berechnet. Weiterhin werden für Kalibrierzusammensetzungen mit verschiedenen Konzentrationen von Kalibrierfarbstoff ebenfalls Emissionsspektren gemessen und aus diesen die jeweilige integrale Fluoreszenzintensität ermittelt. Die integrale Fluoreszenzintensität der Probe kann nun mit Hilfe der Messung an der Kalibrierzusammensetzung referenziert werden. Hierfür wird verglichen bei welcher Konzentration von Kalibrierfarbstoff in der Kalibrierzusammensetzung die integrale Fluoreszenzintensität genauso groß ist wie die integrale Fluoreszenzintensität der Probe. Die Referenzierung sagt dann aus, dass die gemessene integrale Fluoreszenzintensität der Probe einer integralen Fluoreszenzintensität eines bestimmten Kalibrierfarbstoffes bei einer genau definierten Konzentration des Kalibrierfarbstoffes entspricht. Da die Einwaagen des Kalibrierfarbstoffes und die Menge an Lösungsmittel oder Polymerlösung in der Kalibrierzusammensetzung sowie deren Messunsicherheiten genau bekannt sind, ist die Referenzierung vorteilhafterweise rückführbar auf die SI-Einheiten Gramm oder Mol.

Weiterhin umfasst die vorliegende Erfindung ein Kit zur rückführbaren Kalibrierung bzw. Referenzierung einer Fluoreszenzmessung in einem Fluoreszenzmessgerät mit einer Kalibrierzusammensetzung, aufweisend mindestens einen fluoreszenten Kalibrierfarbstoff, mit dem erfindungsgemäßen Verfahren, aufweisend

- mindestens einen Kalibrierfarbstoff bekannter Masse;
- eine Arbeitsanweisung.

Alle bereits für das Verfahren beschriebenen Merkmale treffen auf das Kit zu und umgekehrt. Um Wiederholungen zu vermeiden, sei daher auf die bereits beschriebenen Merkmale des Verfahrens verwiesen.

Das Kit weist mindestens einen Kalibrierfarbstoff bekannter Masse auf. Der Kalibrierfarbstoff kann hierfür in einer Ausführungsform durch eine kalibrierte oder geeichte Feinwaage in einen geeigneten Transportbehälter eingewogen werden. Bevorzugt wird hierfür eine Masse des Kalibrierfarbstoffes eingewogen, die dazu geeignet ist durch Zugabe eines Lösungsmittels oder einer Polymerlösung eine Stammlösung herzustellen.

In einer bevorzugten Ausführungsform der vorliegenden Erfindung wird eine definierte Masse eines Kalibrierfarbstoffes mit einer kalibrierten oder geeichten Feinwaage eingewogen und durch Zugabe einer definierten Menge eines Lösungsmittels oder einer Polymerlösung mit einer kalibrierten Pipette wird eine Stammlösung in einem geeigneten Transportbehälter hergestellt. Anschließend wird das Lösungsmittel verdunstet, so dass nur der Kalibrierfarbstoff in dem Transportbehälter verbleibt.

Das Kit ist insbesondere dafür geeignet zu einem Nutzer versendet zu werden. In dieser Hinsicht ist es besonders vorteilhaft, dass der Kalibrierfarbstoff in dem Kit zunächst als Feststoff vorliegt. Der Transport von Kalibrierfarbstoffen in Lösung verursacht verschiedene Probleme, die hierdurch umgangen werden können. Unter anderem werden Stabilitätsprobleme von Lösungen umgangen, die aufgrund thermischer Einflüsse entstehen können. Bei sehr verdünnten Farbstoffkonzentrationen mit Konzentrationen niedriger $10^{-5}$ M können Wandabsorptionseffekte auftreten, die die Konzentration der Lösungen verändern. Dieser Effekt wird ebenfalls in dem erfindungsgemäßen Kit verhindert.

Weiterhin umfasst das Kit eine Arbeitsanweisung. Die Arbeitsanweisung beinhaltet die Angabe der Einwaage des Kalibrierfarbstoffes und der dazugehörigen Messunsicherheit. Weiterhin ist in der Arbeitsanleitung schrittweise aufgeführt, welche Arbeitsschritte nacheinander auszuführen sind um

A) eine Stammlösung der Kalibrierzusammensetzung herzustellen und

B) das erfindungsgemäße Verfahren zur Referenzierung bzw. Kalibrierung einer Fluoreszenzmessung in einem Fluoreszenzmessgerät durchzuführen.

Im Folgenden wird die Erfindung anhand von 7 Figuren und 2 Ausführungsbeispielen näher erläutert.

Figur 1 (A) und (B) stellen Absorptions- und Emissionsspektren von zwei Fluoreszenzmarkern dar;

Figur 2 (A) bis (H) stellen Absorptions- und Emissionsspektren von blauen Farbstoffen dar, die als Kalibrierfarbstoffe eingesetzt werden können;

Figur 3 (A) bis (I) stellen Absorptions- und Emissionsspektren von roten Farbstoffen dar, die als Kalibrierfarbstoffe eingesetzt werden können;

Figur 4 stellt schematisch die Position einer Küvette bezogen auf eine Lichtquelle und einen Detektor dar;

Figur 5 stellt die Absorptionsspektren von Fluorescein 27 in 0,1M NaOH für verschiedene Verdünnungen zweier Stammlösungen dar;

Figur 6 (A) bis (F) stellen die Emissionsspektren für verschiedene Verdünnungen zweier Stammlösungen dar;

Figur 7 (A) und (B) stellen Emissionsspektren von Fluorescein 27 in 0,1M NaOH dar, (A) normiert bei 540 nm und (B) normiert im Maximum.

**Figur 1(A)** stellt das Absorptions- und Emissionsspektrum des Fluoreszenzmarkers FAM und **Figur 1(B)** das Absorptions- und Emissionsspektrum des Fluoreszenzmarkers ATTO647N dar. Beide Fluoreszenzmarker sind insbesondere geeignet zur Verwendung in einem COVID-19 Fluoreszenzassay.

**Figur 2 (A) bis (H)** stellen Absorptions- und Emissionsspektren von blauen Farbstoffen dar, die als Kalibrierfarbstoffe eingesetzt werden können. Die Graphen zeigen die Spektren der folgenden Farbstoffe:

| Figur | Farbstoff | Figur | Farbstoff |
|---|---|---|---|
| 2(A) | Fluorescein 27® | 2(E) | Oregon Green 488 (OG488) |
| 2(B) | Fluorescein isothiocyanate (FITC) | 2(F) | Oregon Green 514 (®14) |
| 2(C) | FLU | 2(G) | Rhodamin Green (RGR) |
| 2(D) | ATTO488 | 2(H) | ATTO594 |

Die Strukturformeln der jeweiligen Farbstoffe können der Tabelle 2 entnommen werden. Die Fluoreszenzeigenschaften des Farbstoffs Fluorescein 27 gelöst in 0,1M NaOH wurden mittels Absorptions- und Emissionsspektrum im Absorptions- und Fluoreszenzspektrometer untersucht. Eine Übersicht über die Ergebnisse bietet die folgende Datenzusammenstellung:

| | |
|---|---|
| Lösemittel | 0.1 M NaOH |
| Absorptionsbereich | 400 nm - 500 nm |
| Absorptionsmaximum | 474 nm |
| Emissionsbereich | 490 nm - 700 nm; Anregungswellenlänge 474 nm |
| Emissionsmaximum | 527 nm |
| Photolumineszenzquantenausbeute | 88 % (0.1 M NaOH) |
| $A(\lambda_{ex})$ der Messlösung | 0.11 (Extinktion) |
| Extinktionskoeffizient Messlösung | 280.000 $M^{-1}$ $cm^{-1}$ (Absorptionsmaximum 503 nm, 0.1 M NaOH) |

**Figur 3 (A) bis (I**) stellen Absorptions- und Emissionsspektren von roten Farbstoffen dar, die als Kalibrierfarbstoffe eingesetzt werden können. Die Graphen zeigen die Spektren der folgenden Farbstoffe:

| Figur | Farbstoff | Figur | Farbstoff |
|---|---|---|---|
| 3(A) | W S0387 | 3(E) | ATTO633 |
| 3(B) | Methylenblau (MB) | 3(F) | Alexa Fluor 647 |
| 3(C) | ATTO610 | 3(G) | Cyanine5 (Cy5) |
| 3(D) | Bodipy 610 | 3(H) | ATTO680 |
| | | 3(I) | DY 480 |

Die Strukturformeln der jeweiligen Farbstoffe können der Tabelle 1 entnommen werden.

Die Fluoreszenzeigenschaften des Farbstoffs FEW S0387 gelöst in PBS und 0,05% SDS wurde mittels Absorptions- und Emissionsspektrum im Absorptions- und Fluoreszenzspektrometer untersucht. Eine Übersicht über die Messergebnisse bietet die folgende Datenzusammenstellung:

| | |
|---|---|
| Lösemittel | PBS & 0.05 % SDS |
| Absorptionsbereich | 500 nm - 700 nm |
| Absorptionsmaximum | 644 nm |

(fortgesetzt)

| | |
|---|---|
| Emissionsbereich | 620 nm - 850 nm; Anregungswellenlänge 608 nm |
| Emissionsmaximum | 663 nm |
| Photolumineszenzquantenausbeute | 19 % (PBS & 0.05 % SDS) |
| $A(\lambda_{ex})$ der Messlösung | 0.025 |
| Extinktionskoeffizient Messlösung | 176.600 $M^{-1}$ $cm^{-1}$ (Absorptionsmaximum 644 nm, PBS & 0.05 % SDS) |

Auch die Fluoreszenzeigenschaften des Farbstoff Methylenblau (MB) gelöst in PBS und 0,05% SDS, dargestellt in Figur 3(B), wurde mittels Absorptions- und Emissionsspektrum im Absorptions- und Fluoreszenzspektrometer untersucht. Eine Übersicht der Ergebnisse und Messbedingungen bietet die folgende Datenzusammenstellung:

| | |
|---|---|
| Lösemittel | PBS & 0.05 % SDS |
| Absorptionsbereich | 500 nm - 720 nm |
| Absorptionsmaximum | 665 nm |
| Emissionsbereich | 625 nm - 900 nm; Anregungswellenlänge 620 nm |
| Emissionsmaximum | 685 nm |
| Photolumineszenzquantenausbeute | 3 % (PBS & 0.05 % SDS) |
| $A(\lambda_{ex})$ der Messlösung | 0.018 |
| Extinktionskoeffizient Messlösung | 157.200 $M^{-1}$ $cm^{-1}$ (Absorptionsmaximum 664 nm, PBS & 0.05 % SDS) |

**Figur 4** stellt schematisch die Position einer Küvette bezogen auf eine Lichtquelle und einen Detektor dar. In der rechten Abbildung ist die Positionierung in der Absorptionsmessung dargestellt und in der linken Abbildung die Positionierung in der Emissionsmessung.

**Figur 5** stellt die Absorptionsspektren von Fluorescein 27 in 0,1M NaOH für verschiedene Verdünnungen zweier Stammlösungen dar. Ausgehend von zwei Stammlösungen mit einer Farbstoffkonzentration von $2*10^{-4}$ Mol wurden von jeder Stammlösung je eine Verdünnung mit einer Farbstoffkonzentration von $1*10^{-4}$ Mol, $1*10^{-5}$ Mol und $1*10^{-6}$ Mol angefertigt und das Absorptionsspektrum gemessen.

**Figur 6 (A) bis (F)** stellen die Emissionsspektren für die bereits beschriebenen Verdünnungen der zwei Stammlösungen dar.

**Figur 7 (A) und (B)** stellt Emissionsspektren von Fluorescein 27 in 0,1M NaOH dar, wobei in Figur 7 (A) die Emissionsspektren im Maximum normiert sind und in Figur 7 (B) bei 540 nm.

**Ausführungsbeispiel 1 - Kalibrierung eines Fluoreszenzmessgerätes**

Es wurden zwei Einwaagen des Farbstoffes Fluorescein 27 mit einer kalibrierten Ultramikrofeinwaage hergestellt und die eingewogenen Mengen in einem definierten Volumen des Lösungsmittels 0.1 M NaOH gelöst. Die so erhaltene Stammlösung und die daraus durch definierte Verdünnungsschritte hergestellten Messlösungen wurden mit einem kalibrierten Spektrophotometer photometrisch vermessen (Bestimmung der Extinktion bei der Anregungswellenlänge und des molaren Extinktionskoeffizienten im Absorptionsmaximums des Farbstoffes) und fluorometrisch charakterisiert mit einem kalibrierten Fluoreszenzspektrometer. Alle spektroskopischen Messungen erfolgten mit identischen Geräteeinstellungen. Das Spektrophotometer war hinsichtlich der Intensitätsachse und der Wellenlängenrichtigkeit kalibriert, dabei wurde die Intensitätsachse mittels kommerzieller Kalibrierlösungen, wie sie beispielswiese die Firma Merck KGaA anbietet kalibriert und die Wellenlängenrichtigkeit mittels zertifizierten Filtern, wie sie beispielsweise die Firma Hellma GmbH & Co. KG anbietet. Das Fluoreszenzspektrometer war hinsichtlich der Wellenlängenachse bzw. Wellenlängenrichtigkeit, spektrale Empfindlichkeit und dem Linearitätsbereich des Detektionssystems kalibriert.

*Verwendete Messgeräte*

Für die Messungen der Absorptionsspektren wurde ein kalibriertes Absorptionsspektrometer Cary 5000 von Varian, mit einer kalibrierten Wellenlängen- und Intensitätsskala bzw. -achse verwendet sowie Küvetten unterschiedlicher Schichtdicke (0,2 und 1 cm).

Für die Messungen der Emissionsspektren wurde ein kalibriertes Fluoreszenzspektrometer FSP20 von Edinburgh Instruments mit einer kalibrierten Wellenlängen- und Intensitätsskala bzw. einer kalibrierten spektralen Empfindlichkeit und einem bekannten Linearitätsbereich des Emissionsdetektionssystems verwendet. Alle Messungen mit den Lösungen des Farbstoffs Fluorescein 27 in 0.1 M NaOH unterschiedlicher Konzentration erfolgten bei denselben Einstellungen des Fluoreszenzspektrometers unter Ausnutzung des linearen Bereichs des Emissionsdetektors.

Für die Herstellung der Stammlösungen und der Verdünnungen wurden folgende Pipetten verwendet:

- EP1: kalibrierte Eppendorf-Pipette mit einem Pipettierbereich von 500 µl - 2500 µl
- EP2: kalibrierte Eppendorf-Pipette mit einem Pipettierbereich von 100 µl - 1000 µl Für die Einwaage der Feststoffe wurde eine kalibrierte Feinwaage verwendet.

*Beschreibung der Vorgehensweise*

1. Es wurden zwei Einwaagen F27_01 und F27_02 des Farbstoffes Fluorescein 27 in einem vergleichbaren Massebereich mit derselben kalibrierten Mikrofeinwaage hergestellt.
2. Es wurden jeweils eine Stammlösung SL01 und SL02 der Kalibrierzusammensetzung mit einer Farbstoff-Ziel-Konzentration von $2*10^{-4}$ Mol durch Lösen der eingewogenen Masse des Farbstoffes mit einem auf die Einwaage abgestimmten Volumen des Lösungsmittels 0.1 M NaOH Lösung (siehe Tabelle 8) hergestellt. Für die Zugabe des Lösungsmittels wurde Pipette EP1 verwendet.

Tabelle 8: Zusammensetzung der Stammlösungen SL01 und SL02 der Kalibrierzusammensetzungen

| | SL01 | SL02 |
|---|---|---|
| Einwaage Fluorescein 27 (µg) | 554.0 | 574.3 |
| Lösemittel (ml) | 6.904 (=3 * 2 + 1.904) | 7.157 (=3 * 2 + 1.157) |

3. Es wurden zwei verdünnte Messlösungen SL01_V1 und SL02_V1 mit einer Farbstoff-Konzentration von $1*10^{-4}$ M aus den zuvor hergestellten Stammlösungen (1:1-Verdünnung) unter Verwendung von Pipette EP1 durch Zugabe von jeweils 2 ml Lösungsmittel 0.1 M NaOH zu 2 ml der jeweiligen Farbstoff-Stammlösung in einem Probenfläschchen von 7 ml Gesamtvolumen hergestellt.
4. Es wurden zwei 0,2 cm*1,0 cm -Küvetten A und B mit den Messlösungen SL01_V1 und SL02_V1 befüllt. Anschließend wurden die Absorptions- und Emissionsspektren gemessen:

- Für die Messung der Absorptionsspektren wurde das Absorptionsspektrometer Cary 5000 verwendet. Jede Messung wurde einmal durchgeführt (Einfachbestimmung). Die Messung erfolgte im oberen Messbereich des verwendeten Absorptionsspektrometers, wobei die Orientierung der Küvette der in Figur 4 links dargestellten schematischen Anordnung entsprach. Die 1,0 cm lange Seite der Küvette befand sich senkrecht zur Lichtquelle, d.h. die optische Weglänge bzw. die relevante Schichtdicke im Strahlengang betrug 0,2 cm.

- Für die Messung der Emissionsspektren wurde das Emissionsspektrometer FSP920 mit einer Anregung bei einer Wellenlänge von 475 nm verwendet. Jedes Emissionsspektrum wurde dreimal gemessen. Die Küvette wurde, entsprechend der in Figur 4 rechts abgebildeten schematischen Anordnung, positioniert. Die 1,0 cm lange Seite der Küvette befand sich senkrecht zur Lichtquelle und die 0,2 cm lange Seite der Küvette zeigte zum Detektor. Die optische Weglänge betrug damit in Anregung 0,2 cm und 0,5 cm in Detektion bei einer 0°/90°-Messgeometrie.

5. Es wurden zwei verdünnte Messlösungen SL01_V2 und SL02_V2 der Kalibrierzusammensetzung aus den Messlösungen SL0x_V1 (aus Schritt 3.) mit einer Farbstoff-Konzentration von $1*10^{-5}$ M durch einen weiteren Verdünnungsschritt (Verdünnung 1 zu 10) hergestellt. Hierfür wurden 600 µl der jeweiligen Messlösung_V1 unter Verwendung von Pipette EP2 auf jeweils 5.4 ml (= 2 * 2 ml + 1.4 ml) Lösungsmittel unter Verwendung von Pipette EP1 in einem Probenfläschchen von 7 ml Gesamtvolumen gegeben.
6. Es wurden zwei 1,0 cm * 1,0 cm -Küvetten A und B mit den Messlösungen SL01_V2 und SL02_V2 befüllt und die Absorptions- und Emissionsspektren wie unter Schritt 4 beschrieben gemessen.
7. Es wurden zwei weitere Messlösungen SL01_V3 und SL02_V3 aus den Messlösungen SL01_V2 und SL02_V2 (aus Schritt 5.) mit Farbstoff-Konzentrationen von $1*10^{-6}$ M durch einen weiteren Verdünnungsschritt (Verdünnungsfaktor 1 zu 10) durch Hinzugabe von jeweils 600 µl der jeweiligen Stammlösung unter Verwendung von Pipette EP2 auf jeweils 5.4 ml (= 2 * 2 ml + 1.4 ml) Lösungsmittel unter Verwendung von Pipette EP1 in einem Probenfläschchen von 7 ml Gesamtvolumen hergestellt.
8. Es wurden zwei 1,0 cm*1,0 cm -Küvetten A und B mit den Verdünnungslösungen SL01_V3 und SL02_V3 befüllt und die Absorptions- und Emissionsspektren wie unter Schritt 4 beschrieben gemessen.

*Ergebnisse der Absorptionsmessungen:*

Die in den Tabellen 9 bis 11 angegebenen molaren Extinktionskoeffizienten ε ergeben sich aus der jeweils gemessenen Absorption A im Absorptionsmaximum, der Farbstoff-Konzentration c der Messlösung sowie der Schichtdicke d der Küvette von 0,2 cm bzw. 1 cm nach den Formeln (1) und (2). Die zugrunde liegenden Absorptionsspektren sind Lösemittel-und Basislinien-korrigiert. Die gemessenen Absorptionsspektren sind in der Figur 5 dargestellt.

Tabelle 9: Ermittelte molare Extinktionskoeffizienten für Messlösung SL01 und SL02, Verdünnung 1 ($1*10^{-4}$ M, Lösemittel 0.1 M NaOH), bestimmt im Absorptionsmaximum bei 491 nm; 0,2 cm Küvetten (d = 0,2 cm)

| Probe | gemessene Extinktion | | $\varepsilon(\lambda_{max})$/ ($L\ M^{-1}\ cm^{-1}$) | |
|---|---|---|---|---|
| | SL01_V1 | SL01_V2 | SL02_V1 | SL02_V2 |
| A | 1,456 | 1,462 | 72.800 | 73.100 |
| B | 1,441 | 1,459 | 72.050 | 72.950 |
| | | | | |
| Mittelwert | 1,4545 | | 72.725 | |
| Standardabweichung | 0,0093 | | 466,4 | |
| Variationskoeffizient | 0,0064 | | 0,0064 | |

Tabelle 10: Ermittelte molare Extinktionskoeffizienten für Messlösung SL01 und SL02, Verdünnung 2 ($1*10^{-5}$ M, Lösemittel 0.1 M NaOH), bestimmt im Absorptionsmaximum bei 491 nm; 1 cm Küvette

| Probe | gemessene Absorption | | $\varepsilon(\lambda_{max})$/ ($L\ M^{-1}\ cm^{-1}$) | |
|---|---|---|---|---|
| | SL01_V1 | SL01_V2 | SL02_V1 | SL02_V2 |
| A | 0,7521 | 0,7451 | 75.210 | 74.510 |
| B | 0,7480 | 0,7435 | 74.800 | 74.350 |
| | | | | |
| Mittelwert | 0,7472 | | 74.717,5 | |
| Standardabweichung | 0,0038 | | 377,5 | |
| Variationskoeffizient | 0,0051 | | 0,0051 | |

Tabelle 11: Ermittelte molare Extinktionskoeffizienten für Messlösung SL01 und SL02, Verdünnung 3 ($1\times10^{-6}$ M, Lösemittel 0.1 M NaOH), bestimmt im Absorptionsmaximum bei 491 nm, 1 cm Küvette

| Probe | gemessene Absorption | | $\varepsilon(\lambda_{max})$/ ($L\ M^{-1}\ cm^{-1}$) | |
|---|---|---|---|---|
| | SL01_V1 | SL01_V2 | SL02_V1 | SL02_V2 |
| A | 0,0715 | 0,0718 | 71.500 | 71.800 |
| B | 0,0717 | 0,0701 | 71.700 | 70.100 |
| | | | | |
| Mittelwert | 0,0713 | | 71.275,0 | |
| Standardabweichung | 0,0008 | | 793,2 | |
| Variationskoeffizient | 0,0111 | | 0,0111 | |

*Ergebnisse der Emissionsmessungen*

Der Farbstoff Fluorescein 27 zeigt eine Überlappung des Absorptions- mit dem Emissionsspektrum. Bei höheren

Konzentrationen des Farbstoffes führt dies zu einer Reabsorption von emittierten Photonen und damit zu einer Unterschätzung der Fluoreszenzintensität bzw. der Zahl der emittierten Photonen im Spektralbereich der kurzwelligen Flanke des Emissionsspektrums. Dies führt auch zu einer Rotverschiebung der Emissionsspektren. Um Beiträge von Reabsorptionseffekten bei der Angabe der integralen Fluoreszenzintensität in Tabelle 12 zu minimieren, wurde das Flächenintegral der Emissionsbande nur im Wellenlängenbereich zwischen 540 nm und 650 nm ermittelt, also in einem Spektralbereich, wo die Überlappung von Absorption und Emission möglichst gering ist.

Die Figuren 6 (A) bis (F) stellen die Emissionsspektren der einzelnen Kalibrierzusammensetzungen mit unterschiedlicher Konzentration an Kalibrierfarbstoff dar.

Die in Tabelle 12 und die in Figur 7 (A) und (B) dargestellten Emissionsspektren bzw. Fluoreszenzintensitäten sind dimensionslos und beziehen sich auf die vom Detektor des verwendeten Fluoreszenzspektrometers gemessene Zahl der Photonen (photon counts).

Figur 7 stellt die Emissionsspektren von Fluorescein 27 in 0.1 M NaOH dar wobei in Figur 7(A) die Kurven auf die Fluoreszenzintensität bei einer Wellenlänge von 540 nm und in Figur 7(B) auf das Maximum normiert sind. Farbstoff-Lösungen mit einer Konzentration von $1\times10^{-6}$ M zeigen dabei die kurzwelligsten Emissionsspektren, die Emissionsspektren der Farbstoff-Lösungen mit den Konzentrationen $1\times10^{-5}$ M und $1\times10^{-4}$ M sind langwellig verschoben. Diese Rotverschiebung mit zunehmender Farbstoffkonzentration und die in der rechten Abbildung dargestellte relative Intensitätsabnahme der bei 540 nm normierten Emissionsspektren mit zunehmender Farbstoffkonzentration sind auf Innere Filtereffekte bzw. Reabsorption zurückzuführen.

Tabelle 12: Integrale Fluoreszenzintensität der unnormierten Emissionsspektren von Fluorescein 27 in 0.1 M NaOH im nahezu reabsorptionsfreien Bereich von 540 nm - 650 nm (schraffierter Bereich in den Figuren 6 (A) bis (F))

| Integrale Fluoreszenzintensität $I_I$ (relative Einheiten) | | | | | | |
|---|---|---|---|---|---|---|
| Probe | Verdünnung der Stammlösungen SL01/SL02 | | | | | |
| | SL01_V1* | SL02_V1* | SL01_V2 | SL02_V2 | SL01_V3 | SL02_V3 |
| A_M01 | 24.801.400,0 | 24.962.100,0 | 8.247.129,9 | 8.274.617,4 | 1.228.456,4 | 1.270.908,9 |
| A_M02 | 24.864.800,0 | 25.002.900,0 | 8.287.354,5 | 8.303.095,9 | 1.230.963,6 | 1.268.294,8 |
| A_M03 | 24.679.900,0 | 25.037.600,0 | 8.263.666,8 | 8.337.678,3 | 1.232.161,3 | 1.270.047,0 |
| B_M01 | 25.058.400,0 | 25.311.300,0 | 8.430.505,1 | 8.610.678,8 | 1.237.574,9 | 1.267.185,1 |
| B_M02 | 24.986.300,0 | 25.342.800,0 | 8.425.188,4 | 8.608.907,8 | 1.235.397,1 | 1.264.735,1 |
| B_M03 | 24.905.100,0 | 25.248.100,0 | 8.396.373,0 | 8.613.142,1 | 1.238.084,2 | 1.262.351,9 |
| | | | | | | |
| Mittelwert | 24.882.650,0 | 25.150.800,0 | 8.341.702,9 | 8.458.020,1 | 1.233.772,9 | 1.267.253,8 |
| StAbw. | 134.285,62 | 168.753,00 | 84.654,50 | 168.674,13 | 3.858,37 | 3.244,16 |
| VarKoeff | 0,0054 | 0,0067 | 0,0101 | 0,0199 | 0,0031 | 0,0026 |
| | | | | | | |
| Mittelwert | 25.016.725,0* | | 8.399.861,5 | | 1.250.513,3 | |
| StAbw. | 201.869,51 | | 14.0995,08 | | 17.812,08 | |
| VarKoeff | 0,0081 | | 0,0168 | | 0,0142 | |
| * ermittelt in einer 0,2x1,0 cm Küvette (siehe Abb. 1) | | | | | | |

Tabelle 13: Korrelation der Konzentration von Fluorescein 27 mit der gemessenen integralen Fluoreszenzintensität $I_I$ (in Photonenzahlen bzw. counts = cts)

| | | |
|---|---|---|
| $I_I$ (cts) | 8.399.861,5 | 1.250.513,3 |
| Farbstoffkonzentration c (in M = mol/l) | $1\times10^{-5}$ | $1\times10^{-6}$ |
| Abs ($\lambda_{ex}$) | 0,414 | 0,036 |

(fortgesetzt)

| | | |
|---|---|---|
| $I_I$ / c | 8,3999×$10^{11}$ | 1,2505×$10^{12}$ |

Das Beispiel verdeutlicht wie eine rückführbare Kalibrierung einer Fluoreszenzmessung in einem Fluoreszenzmessgerät gemäß der vorliegenden Erfindung vorgenommen werden kann. Die in dem Ausführungsbeispiel ermittelten Werte können nun als Referenz für eine Geräteüberprüfung zu einem späteren Zeitpunkt dienen. In dieser Überprüfung wird das Verfahren genau wie im Ausführungsbeispiel dargelegt an demselben Gerät erneut durchgeführt. Veränderte gerätespezifische Einflussgrößen würden sich in einer veränderten integralen Fluoreszenzintensität $I_I$ bei den vermessenen Konzentrationen der Kalibrierzusammensetzung niederschlagen.

**Ausführungsbeispiel 2 - Referenzierung einer Probe**

Das Ausführungsbeispiel 1 kann auch analog auf einen Assay (zum Nachweis von Targets und Zielstrukturen wie beispielsweise von krankheitsrelevanten bzw. krankheitsspezifischen Biomolekülen) und dem darin zur Erzeugung des Fluoreszenzsignals eingesetzten Farbstoff (Assay-Fluoreszenzmarker) übertragen werden, beispielsweise mit den folgenden Schritten:

i.) Auswahl des Kalibrierfarbstoff: muss auf die spektralen Absorptions- und Emissionseigenschaften des im Assay eingesetzten Fluoreszenzmarkers im verwendeten Lösemittel angepasst sein. Dies umfasst, dass die Absorptions- und Emissionsspektren des Kalibrierfarbstoffes und des Assay-Fluoreszenzmarkers gemessen werden müssen mit ein und demselben Absorptions- und Fluoreszenzmessgerät in den jeweils für den Kalibrierfarbstoff und den Fluoreszenzmarker ausgewählten Lösemitteln, möglichst unter identischen Messbedingungen.

ii.) Signalanpassung für den Kalibrier- und den Assay-Fluoreszenzmarker: entweder vergleichende Bestimmung der molaren Extinktionskoeffizienten und der Fluoreszenzquantenausbeuten des Kalibrierfarbstoffes und des Assay-Fluoreszenzmarkers zur Ermittlung der Signal-bestimmenden Helligkeit beider Farbstoffsysteme oder Vergleich der Intensitäten der Fluoreszenzsignale einer Lösung des Kalibrierfarbstoffes und des Assay-Fluoreszenzmarkers bekannter Konzentration. Der konzentrationsbasierte Signalvergleich umfasst, dass die Fluoreszenzemissionsspektren für den Kalibrierfarbstoff und den Assay-Fluoreszenzmarker mit ein und demselben Fluoreszenzmessgerät in den jeweils für den Kalibrierfarbstoff und den Fluoreszenzmarker ausgewählten Lösemitteln unter identischen Messbedingungen ermittelt werden. Dieser Vergleich bzw. der dabei ermittelte Fluoreszenzfaktor zum Abgleich der Fluoreszenzintensitäten kann dann später auch für die Kalibrierung und Referenzierung des Assays verwendet werden. Dabei wird im ersteren Fall eine Rückführung auf spektroskopische Messgrößen und im letzteren Fall eine Rückführung auf die Masse durchgeführt.

iii.) Durch den Vergleich der Fluoreszenzintensitäten von Kalibrierfarbstoff und Assay-Fluoreszenzmarker wird der im Assay gemessenen Fluoreszenzintensität für den Fluoreszenzmarker (oder ein mit diesem Fluoreszenzmarker markiertes Biomolekül wie z.B. eine bestimmte DNA-Sequenz oder ein Protein oder Peptid oder ein anderer Analyt eine Intensität des Kalibrierfarbstoffs XY mit einer Konzentration XY zugeordnet.

**Literaturverzeichnis**

[1] Schädel et al. PTB-Mitteilungen 118 (2008), Heft 4, 248-254
[2] D. Cavazos-Elizondo, A. Aguirre-Soto, Anal. Sens. 2022, 2, e202200004.
[3] Taniguchi, M. and Lindsey, J.S. (2018), Photochem Photobiol, 94: 290-327.

**Patentansprüche**

1. Verfahren zur rückführbaren Kalibrierung bzw. Referenzierung einer Fluoreszenzmessung in einem Fluoreszenzmessgerät mit einer Kalibrierzusammensetzung, aufweisend mindestens einen fluoreszenten Kalibrierfarbstoff **dadurch gekennzeichnet, dass** das Verfahren die Schritte aufweist

   • Einwaage mindestens eines Kalibrierfarbstoffs mit Hilfe einer kalibrierten oder geeichten Feinwaage;
   • Herstellen einer Stammlösung einer Kalibrierzusammensetzung durch Zugabe eines Lösungsmittels oder einer Polymerlösung bekannter Masse;

• Herstellen einer Verdünnungsreihe mit bekannten Konzentrationen des mindestens einen Kalibrierfarbstoffs;
• Messen des Absorptionsspektrum für jede Konzentration der Verdünnungsreihe der Kalibrierzusammensetzung in einem Absorptionsspektrometer und Berechnung des molaren Extinktionskoeffizienten aus der gemessenen Extinktion für jede Konzentration des mindestens einen Kalibrierfarbstoffs der Verdünnungsreihe;
• Messen des Emissionsspektrums für jede Konzentration der Verdünnungsreihe der Kalibrierzusammensetzung in dem einen Fluoreszenzmessgerät;
• Berechnung der integralen Fluoreszenzintensität für jede Konzentration des mindestens einen Kalibrierfarbstoffs der Verdünnungsreihe aus den Emissionsspektren;
• Zuordnung des jeweiligen molaren Extinktionskoeffizienten und der jeweiligen integralen Fluoreszenzintensität zu einer Konzentration der Kalibrierzusammensetzung.

2. Verfahren gemäß Anspruch 1 **dadurch gekennzeichnet, dass** das Verfahren weiterhin die Schritte aufweist

• Bereitstellen einer Probe aufweisend mindestens einen Fluoreszenzmarker;
• Messen mindestens eines Absorptionsspektrums der Probe in einem Absorptionsspektrometer und Berechnung des molaren Extinktionskoeffizienten aus der gemessenen Extinktion;
• Messen mindestens eines Emissionsspektrums der Probe in dem Fluoreszenzmessgerät unter den gleichen Messbedingungen, wie die Emissionsspektren jede Konzentration der Verdünnungsreihe der Kalibrierzusammensetzung gemessen wurden;
• Berechnung der integralen Fluoreszenzintensität der Probe aus dem Emissionsspektrum;
• Zuordnung der integralen Fluoreszenzintensität des mindestens einen Emissionsspektrums der Probe zur integralen Fluoreszenzintensität einer Konzentration der Kalibrierzusammensetzung;

wobei die spektralen Eigenschaften der Kalibrierzusammensetzung auf den mindestens einen Fluoreszenzmarker der Probe angepasst sind.

3. Verfahren gemäß einem der vorangegangenen Ansprüche, **dadurch gekennzeichnet, dass** als Messbedingungen dieselben Geräteparameter, dieselbe Messgeometrie und optional dieselbe Art von Messbehältnis bei der Messung der Emissionspektren der Probe wie bei der Messung des Emissions- und/oder Absorptionsspektrums der Kalibrierlösung verwendet werden.

4. Verfahren gemäß einem der vorangegangenen Ansprüche, **dadurch gekennzeichnet, dass** die spektralen Eigenschaften der Kalibrierzusammensetzung auf den mindestens einen Fluoreszenzmarker der Probe angepasst sind, indem die Fluoreszenz des mindestens einen Kalibrierfarbstoffs bei derselben Wellenlänge angeregt werden kann wie die Fluoreszenz mindestens eines Fluoreszenzmarkers der Probe, und dass das Emissionsspektrum des mindestens einen Kalibrierfarbstoffs mit dem Emissionsspektrum mindestens eines Fluoreszenzmarkers der Probe überlappt.

5. Verfahren gemäß einem der vorangegangenen Ansprüche, **dadurch gekennzeichnet, dass** die Kalibrierzusammensetzung ein Lösungsmittel oder eine Polymerlösung aufweist.

6. Verfahren gemäß einem der vorangegangenen Ansprüche, **dadurch gekennzeichnet, dass** bei der Herstellung der Kalibrierzusammensetzung dieser weiterhin mindesten ein Tensid bekannter Masse zugegeben wird.

7. Verfahren gemäß einem der vorangegangenen Ansprüche, **dadurch gekennzeichnet, dass** der mindestens eine Kalibrierfarbstoff ausgesucht ist aus der Gruppe aufweisend organische Farbstoffe, Farbstoff-dotierte oder Farbstoff-beladene Polymer-Systeme und fluoreszente Nanopartikel.

8. Verfahren gemäß Anspruch 7, **dadurch gekennzeichnet, dass** der organische Farbstoff ausgesucht ist aus der Gruppe aufweisend ultraviolette Farbstoffe, deren Emissionsbereich im Spektralbereich zwischen 200 nm und 425 nm liegt, blaue Farbstoffe, deren Emissionsbereich im Spektralbereich zwischen 425 nm und 485 nm liegt, grüne Farbstoffe, deren Emissionsbereich im Spektralbereich zwischen 485 nm und 560 nm liegt, gelb/orange Farbstoffe, deren Emissionsbereich im Spektralbereich zwischen 560 nm und 600 nm liegt, rote Farbstoffe, deren Emissionsbereich im Spektralbereich zwischen 600 nm und 780 nm liegt und infrarote Farbstoffe, deren Emissionsbereich im Spektralbereich zwischen 780 nm und 900 nm liegt.

9. Verfahren gemäß einem der vorangegangenen Ansprüche, **dadurch gekennzeichnet, dass** der mindestens eine Fluoreszenzmarker der Probe ausgewählt ist aus der Gruppe aufweisend blaue Farbstoffe, deren Emissionsbereich

im Spektralbereich zwischen 425 nm und 485 nm liegt und rote Farbstoffe, deren Emissionsbereich im Spektralbereich zwischen 600 nm und 780 nm liegt.

**10.** Kit zur rückführbaren Kalibrierung bzw. Referenzierung einer Fluoreszenzmessung in einem Fluoreszenzmessgerät mit einer Kalibrierzusammensetzung, aufweisend mindestens einen fluoreszenten Kalibrierfarbstoff mit einem Verfahren gemäß einem der Ansprüche 1 bis 9, aufweisend

- mindestens einen Kalibrierfarbstoff bekannter Masse;
- eine Arbeitsanweisung.

FIG 1A

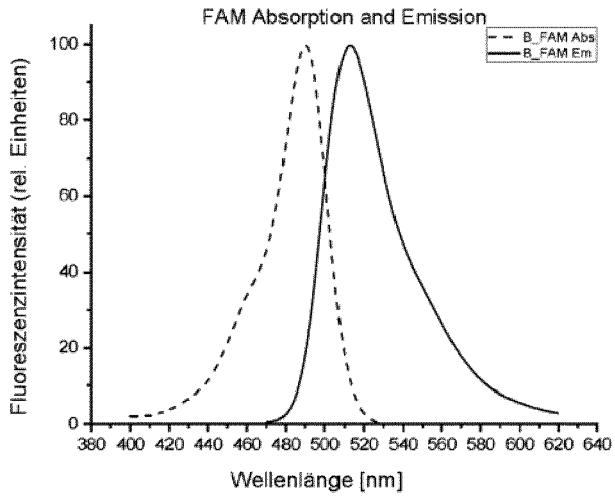
FAM Absorption and Emission
B_FAM Abs
B_FAM Em
Fluoreszenzintensität (rel. Einheiten)
Wellenlänge [nm]
0
20
40
60
80
100
380
400
420
440
460
480
500
520
540
560
580
600
620
640

FIG 1B

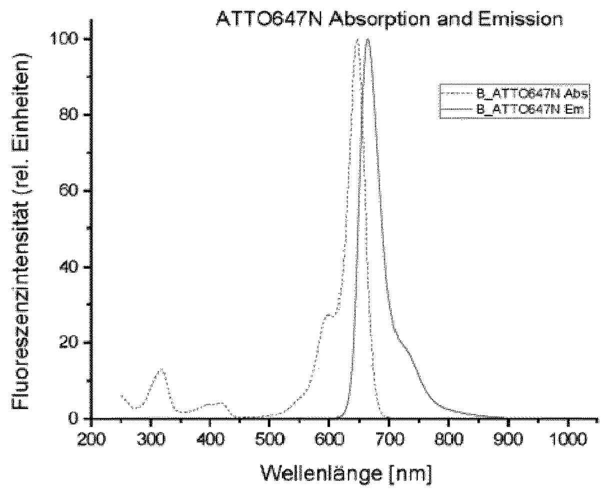
ATTO647N Absorption and Emission
B_ATTO647N Abs
B_ATTO647N Em
Fluoreszenzintensität (rel. Einheiten)
Wellenlänge [nm]
0
20
40
60
80
100
200
300
400
500
600
700
800
900
1000

FIG 2A

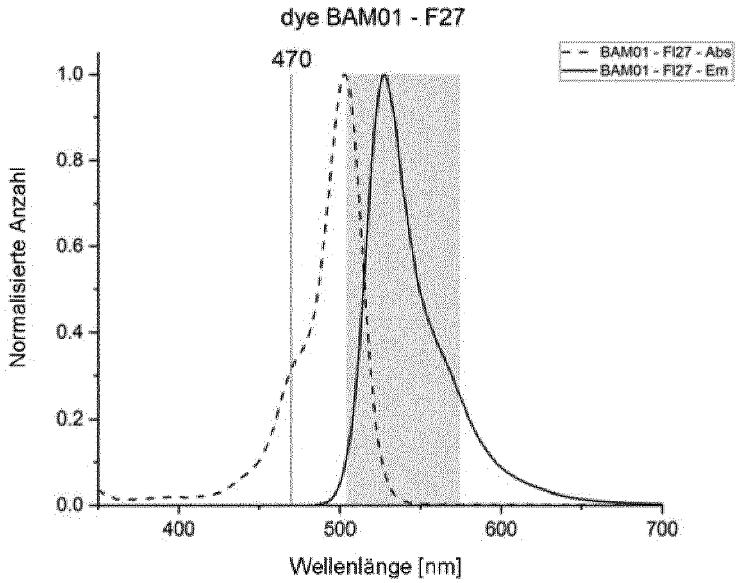
dye BAM01 - F27
470
BAM01 - FI27 - Abs
BAM01 - FI27 - Em
Normalisierte Anzahl
1.0
0.8
0.6
0.4
0.2
0.0
400
500
600
700
Wellenlänge [nm]

FIG 2B

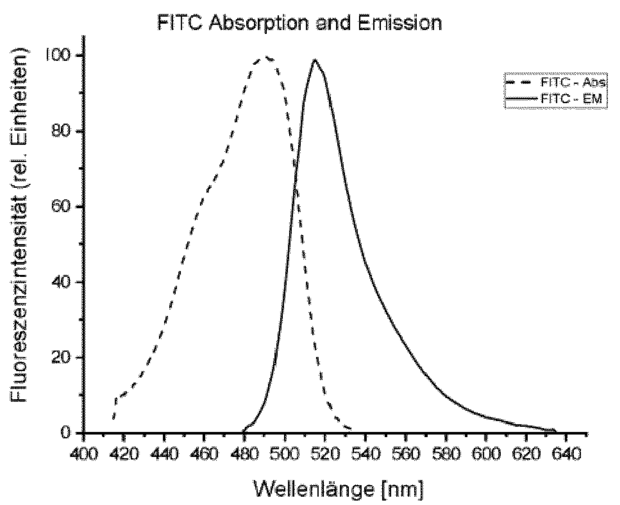
FITC Absorption and Emission
FITC - Abs
FITC - EM
Fluoreszenzintensität (rel. Einheiten)
100
80
60
40
20
0
400 420 440 460 480 500 520 540 560 580 600 620 640
Wellenlänge [nm]

FIG 2C

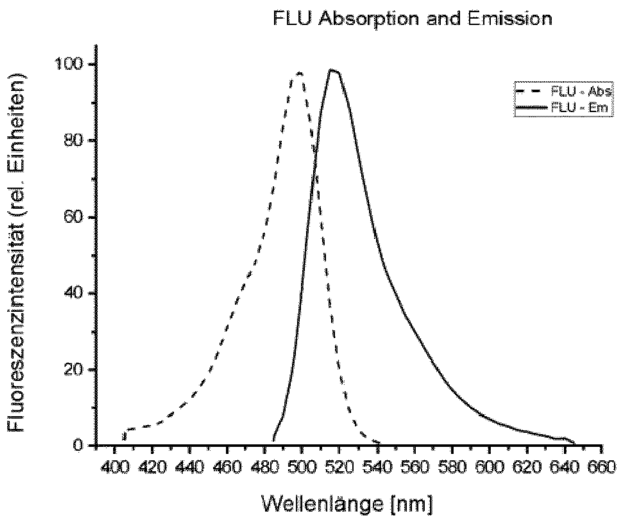
FLU Absorption and Emission
Fluoreszenzintensität (rel. Einheiten)
100
80
60
40
20
0
400 420 440 460 480 500 520 540 560 580 600 620 640 660
Wellenlänge [nm]
FLU - Abs
FLU - Em

FIG 2D

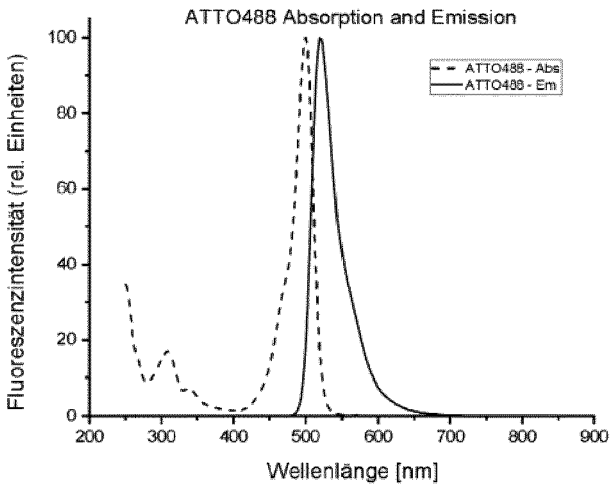
ATTO488 Absorption and Emission
ATTO488 - Abs
ATTO488 - Em
Fluoreszenzintensität (rel. Einheiten)
100
80
60
40
20
0
200
300
400
500
600
700
800
900
Wellenlänge [nm]

FIG 2E

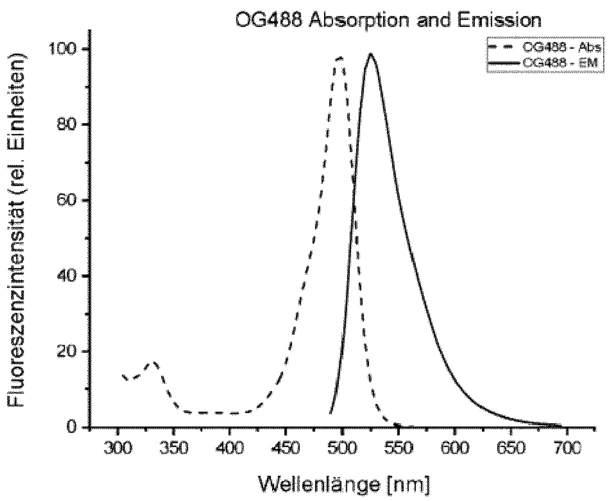
OG488 Absorption and Emission
OG488 - Abs
OG488 - EM
Fluoreszenzintensität (rel. Einheiten)
100
80
60
40
20
0
300
350
400
450
500
550
600
650
700
Wellenlänge [nm]

FIG 2F

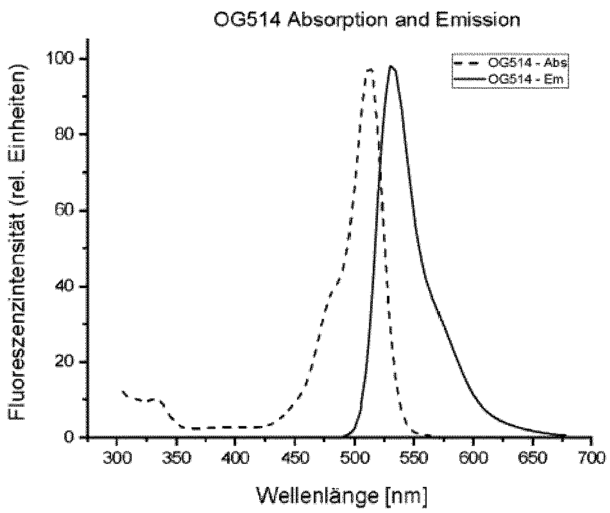
OG514 Absorption and Emission
OG514 - Abs
OG514 - Em
Fluoreszenzintensität (rel. Einheiten)
Wellenlänge [nm]
0
20
40
60
80
100
300
350
400
450
500
550
600
650
700

FIG 2G

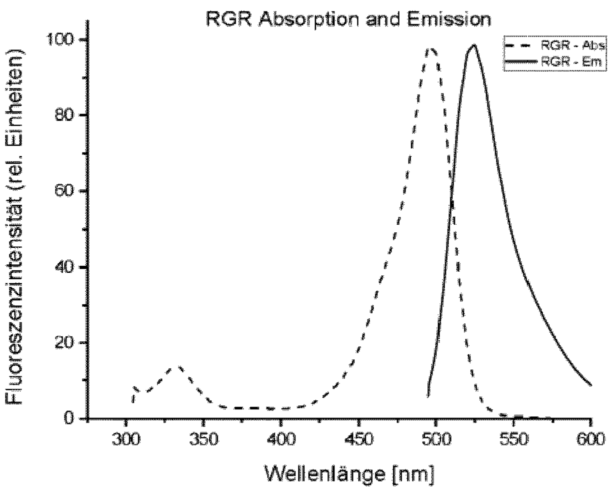
RGR Absorption and Emission
RGR - Abs
RGR - Em
Fluoreszenzintensität (rel. Einheiten)
Wellenlänge [nm]
0
20
40
60
80
100
300
350
400
450
500
550
600

FIG 2H

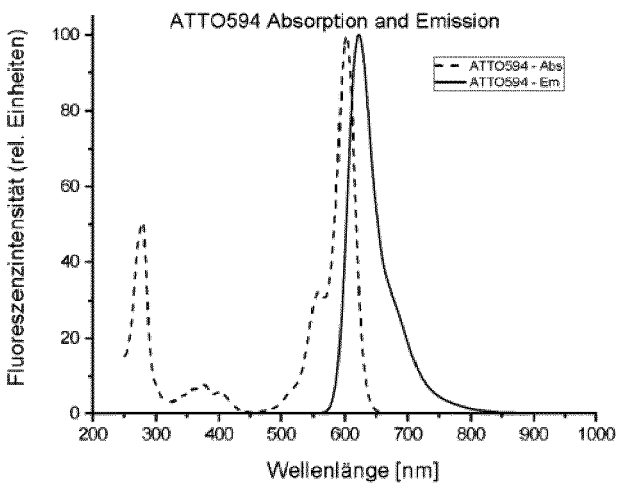
ATTO594 Absorption and Emission
ATTO594 - Abs
ATTO594 - Em
Fluoreszenzintensität (rel. Einheiten)
Wellenlänge [nm]
0
20
40
60
80
100
200
300
400
500
600
700
800
900
1000

FIG 3A

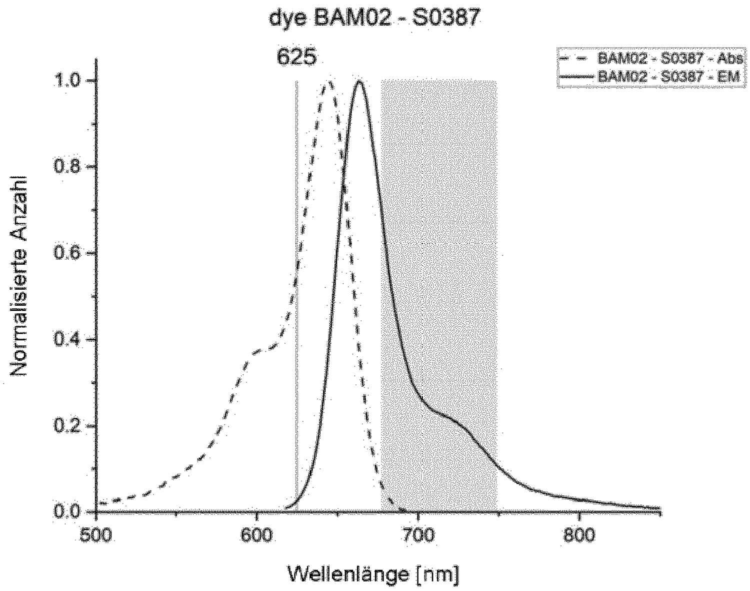
dye BAM02 - S0387
625
BAM02 - S0387 - Abs
BAM02 - S0387 - EM
Normalisierte Anzahl
1.0
0.8
0.6
0.4
0.2
0.0
500
600
700
800
Wellenlänge [nm]

FIG 3B

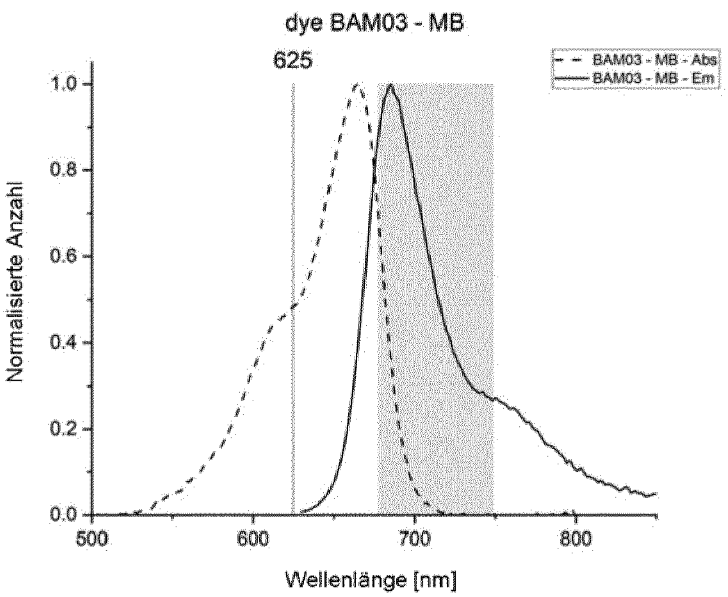
dye BAM03 - MB
625
BAM03 - MB - Abs
BAM03 - MB - Em
Normalisierte Anzahl
1.0
0.8
0.6
0.4
0.2
0.0
500
600
700
800
Wellenlänge [nm]

FIG 3C

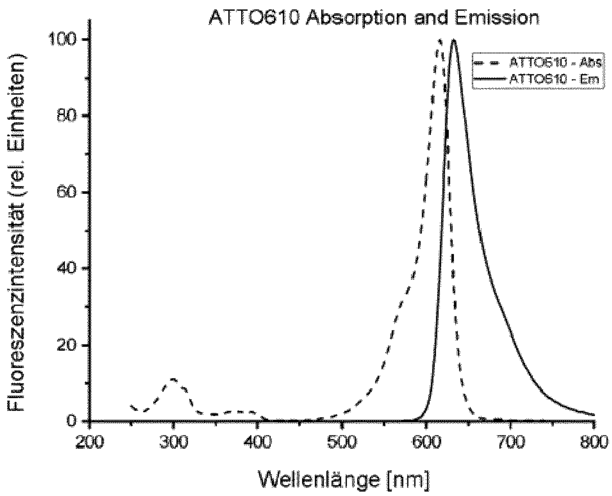
ATTO610 Absorption and Emission
ATTO610 - Abs
ATTO610 - Em
Fluoreszenzintensität (rel. Einheiten)
100
80
60
40
20
0
200
300
400
500
600
700
800
Wellenlänge [nm]

FIG 3D

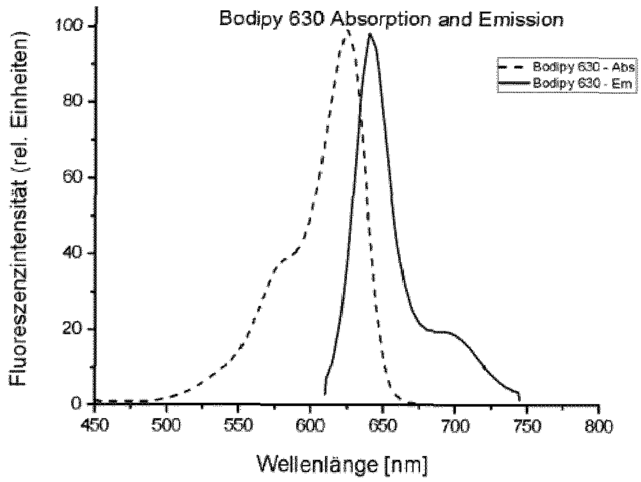
Bodipy 630 Absorption and Emission
Bodipy 630 - Abs
Bodipy 630 - Em
Fluoreszenzintensität (rel. Einheiten)
0
20
40
60
80
100
450
500
550
600
650
700
750
800
Wellenlänge [nm]

FIG 3E

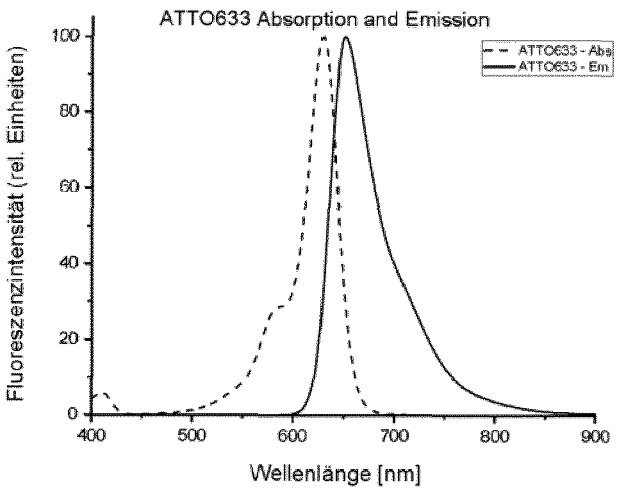
ATTO633 Absorption and Emission
ATTO633 - Abs
ATTO633 - Em
Fluoreszenzintensität (rel. Einheiten)
0
20
40
60
80
100
400
500
600
700
800
900
Wellenlänge [nm]

FIG 3F

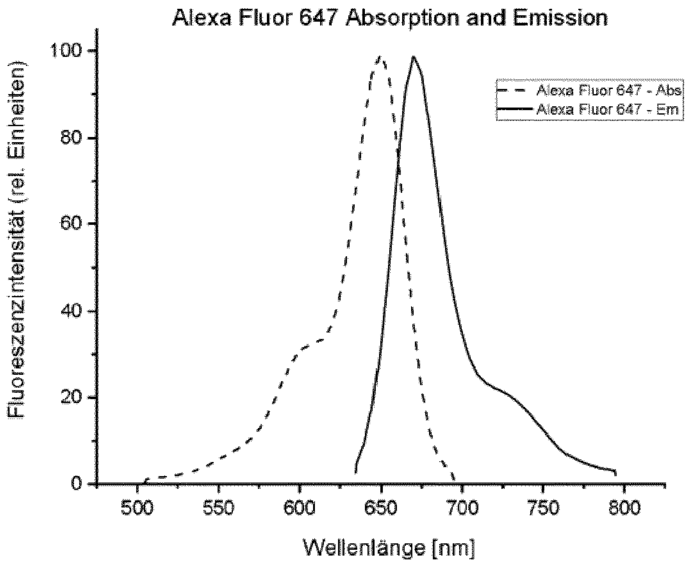
Alexa Fluor 647 Absorption and Emission
Alexa Fluor 647 - Abs
Alexa Fluor 647 - Em
Fluoreszenzintensität (rel. Einheiten)
0
20
40
60
80
100
500
550
600
650
700
750
800
Wellenlänge [nm]

FIG 3G

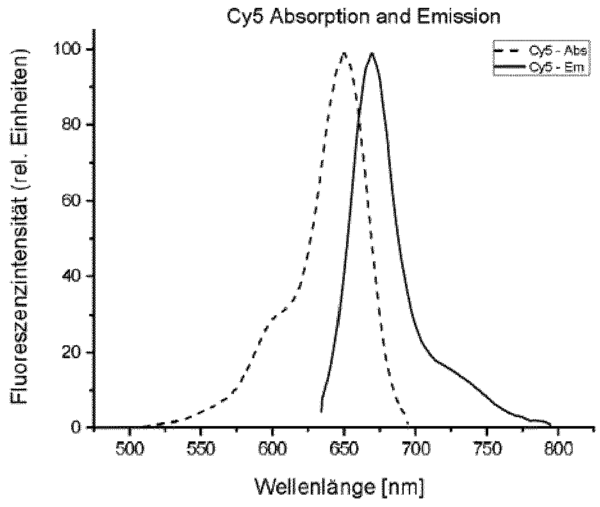
Cy5 Absorption and Emission
Fluoreszenzintensität (rel. Einheiten)
0
20
40
60
80
100
500
550
600
650
700
750
800
Wellenlänge [nm]
Cy5 - Abs
Cy5 - Em

FIG 3H

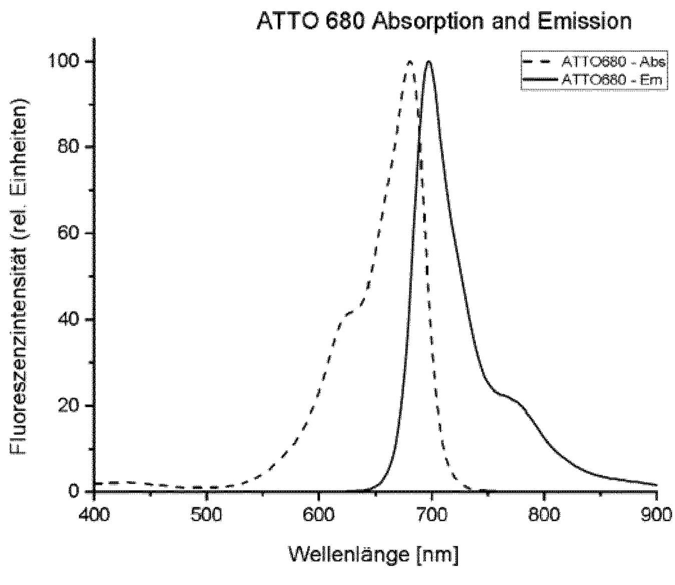
ATTO 680 Absorption and Emission
Fluoreszenzintensität (rel. Einheiten)
0
20
40
60
80
100
400
500
600
700
800
900
Wellenlänge [nm]
ATTO680 - Abs
ATTO680 - Em

FIG 3I

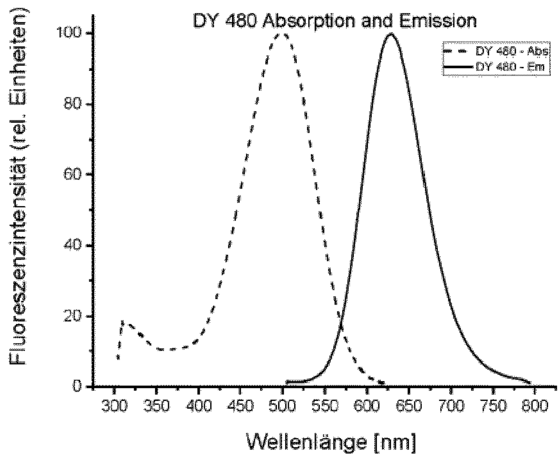
DY 480 Absorption and Emission
DY 480 - Abs
DY 480 - Em
Fluoreszenzintensität (rel. Einheiten)
0
20
40
60
80
100
300
350
400
450
500
550
600
650
700
750
800
Wellenlänge [nm]

FIG 4

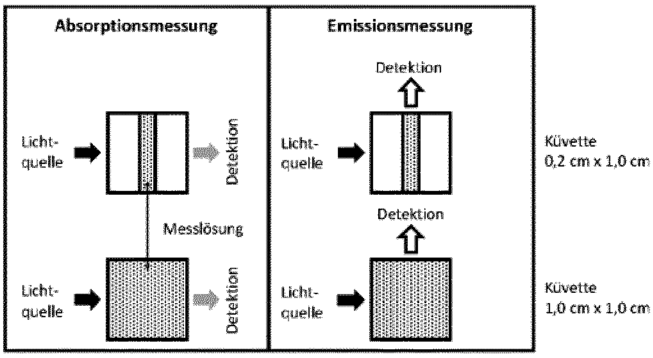
Absorptionsmessung
Emissionsmessung
Licht-quelle
Detektion
Messlösung
Küvette 0,2 cm x 1,0 cm
Küvette 1,0 cm x 1,0 cm

FIG 5

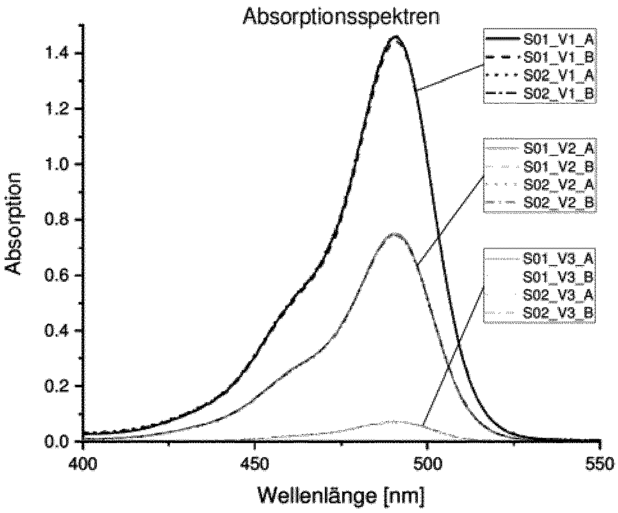
Absorptionsspektren
Absorption
Wellenlänge [nm]
S01_V1_A
S01_V1_B
S02_V1_A
S02_V1_B
S01_V2_A
S01_V2_B
S02_V2_A
S02_V2_B
S01_V3_A
S01_V3_B
S02_V3_A
S02_V3_B

FIG 6A

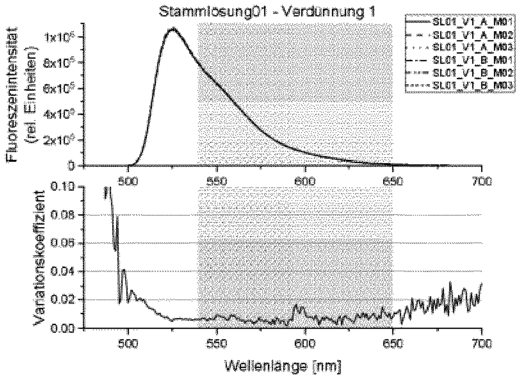


FIG 6B

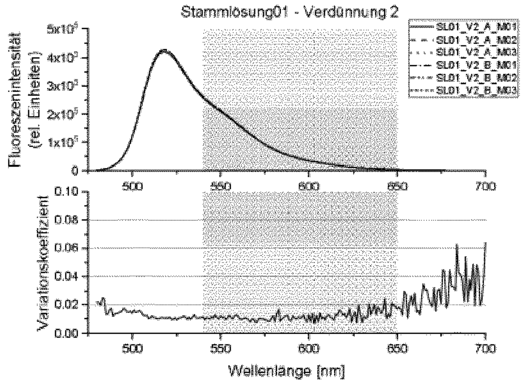


FIG 6C

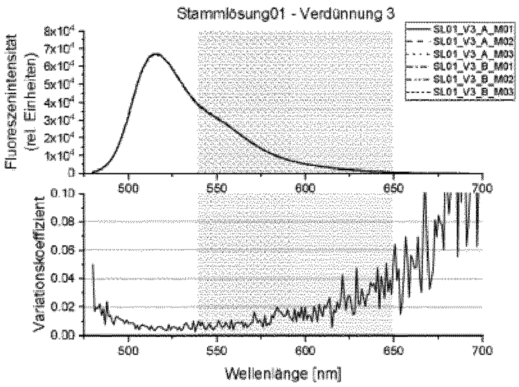


FIG 6D

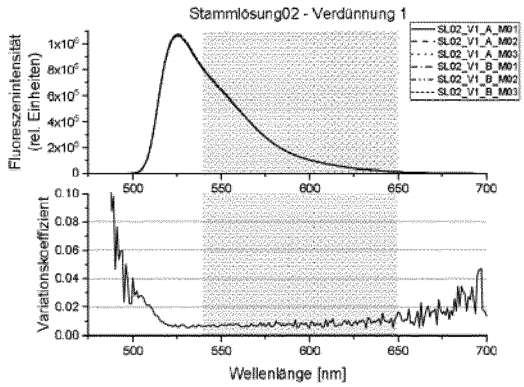


FIG 6E

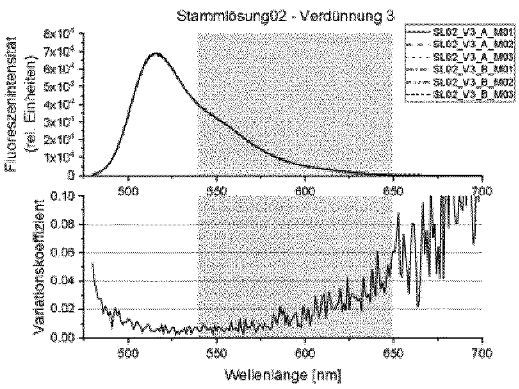


FIG 6F

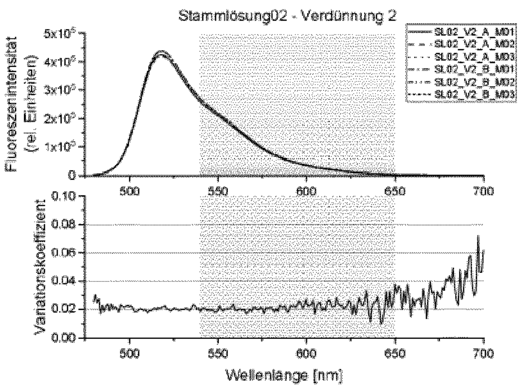

FIG 7A

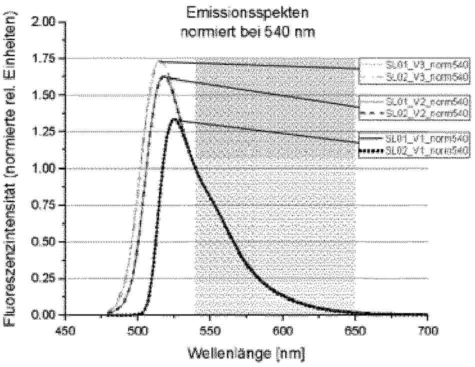
Emissionsspekten
normiert bei 540 nm
Fluoreszenzintensität (normierte rel. Einheiten)
2.00
1.75
1.50
1.25
1.00
0.75
0.50
0.25
0.00
450
500
550
600
650
700
Wellenlänge [nm]
SL01_V3_norm540
SL02_V3_norm540
SL01_V2_norm540
SL02_V2_norm540
SL01_V1_norm540
SL02_V1_norm540

FIG 7B

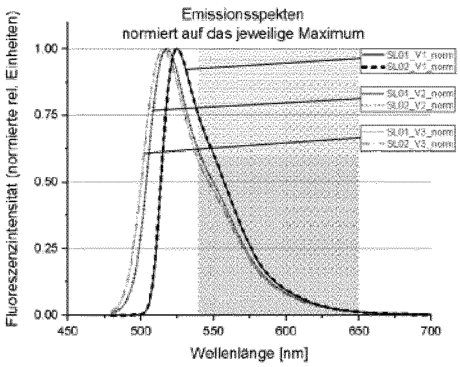
Emissionsspekten
normiert auf das jeweilige Maximum
Fluoreszenzintensität (normierte rel. Einheiten)
1.00
0.75
0.50
0.25
0.00
450
500
550
600
650
700
Wellenlänge [nm]
SL01_V1_norm
SL02_V1_norm
SL01_V2_norm
SL02_V2_norm
SL01_V3_norm
SL02_V3_norm

Europäisches Patentamt
European Patent Office
Office européen des brevets

# EUROPÄISCHER RECHERCHENBERICHT

Nummer der Anmeldung
EP 24 16 1466

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br><br><br><br><br><br><br><br><br><br><br>Y | WANG L ET AL: "Quantification of cells with specific phenotypes II: Determination of CD4 expression level on reconstituted lyophilized human PBMC labelled with anti-CD4 FITC antibody",<br>CYTOMETRY A, WILEY-LISS, HOBOKEN, USA,<br>Bd. 87, Nr. 3,<br>5. Februar 2015 (2015-02-05), Seiten 254-261, XP072332312,<br>ISSN: 1552-4922, DOI: 10.1002/CYTO.A.22634<br>* Zusammenfassung; Seite 256, Kapitel Fluorescence Value Assignment of the Calibration Microspheres;<br>Abbildung 1 *<br>----- | 1-5,7-10<br><br><br><br><br><br><br><br><br><br><br>6 | INV.<br>G01N21/27<br>G01N21/64 |
| Y | US 2014/170698 A1 (PURVIS JR NORMAN BAYLIS [US]) 19. Juni 2014 (2014-06-19)<br>* Absätze [0046] - [0048], [0083] - [0095] *<br>----- | 1-9 | |
| X<br><br><br><br><br><br><br><br><br><br><br>Y | GONZÁLEZ-CEBRIÁN ALBA ET AL: "PLATERO: A calibration protocol for plate reader green fluorescence measurements",<br>FRONTIERS IN BIOENGINEERING AND BIOTECHNOLOGY,<br>Bd. 11, 20. Januar 2023 (2023-01-20), XP093189004,<br>CH<br>ISSN: 2296-4185, DOI: 10.3389/fbioe.2023.1104445<br>* Zusammenfassung; Kapitel 2.1 Experimental Procedure;<br>Abbildung 1 *<br>----- | 10<br><br><br><br><br><br><br><br><br><br><br>1-9 | RECHERCHIERTE SACHGEBIETE (IPC)<br>G01N |
| Y | DE 202 16 998 U1 (EVOTEC AG [DE])<br>18. März 2004 (2004-03-18)<br>* Absatz [0019] *<br>-----<br>-/-- | 6 | |

Der vorliegende Recherchenbericht wurde für alle Patentansprüche erstellt

2

| Recherchenort | Abschlußdatum der Recherche | Prüfer |
|---|---|---|
| München | 26. Juli 2024 | Flentje, Farida |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

Europäisches Patentamt
European Patent Office
Office européen des brevets

# EUROPÄISCHER RECHERCHENBERICHT

Nummer der Anmeldung
EP 24 16 1466

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2006/233668 A1 (RESCH-GENGER UTE [DE] ET AL) 19. Oktober 2006 (2006-10-19)<br>* Absätze [0050] - [0053] *<br>----- | 1-10 | |
| A | DE 10 2014 100536 A1 (BUNDESREP DEUTSCHLAND [DE])<br>23. Juli 2015 (2015-07-23)<br>* Absätze [0031] - [0040] *<br>----- | 1-10 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 26. Juli 2024 | Flentje, Farida |

2

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 24 16 1466

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-07-2024

| Im Recherchenbericht angeführtes Patentdokument | Datum der Veröffentlichung | Mitglied(er) der Patentfamilie | Datum der Veröffentlichung |
|---|---|---|---|
| US 2014170698 A1 | 19-06-2014 | US 2010285594 A1 | 11-11-2010 |
| | | US 2013109050 A1 | 02-05-2013 |
| | | US 2014170698 A1 | 19-06-2014 |
| DE 20216998 U1 | 18-03-2004 | DE 10352123 A1 | 19-08-2004 |
| | | DE 20216998 U1 | 18-03-2004 |
| US 2006233668 A1 | 19-10-2006 | AT E478330 T1 | 15-09-2010 |
| | | DE 102005049365 A1 | 21-09-2006 |
| | | EP 1703271 A1 | 20-09-2006 |
| | | EP 2253687 A2 | 24-11-2010 |
| | | EP 2253688 A2 | 24-11-2010 |
| | | US 2006233668 A1 | 19-10-2006 |
| DE 102014100536 A1 | 23-07-2015 | KEINE | |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Nicht-Patentliteratur


- **SCHÄDEL et al.** *PTB-Mitteilungen,* 2008, vol. 118, 248-254
- **D. CAVAZOS-ELIZONDO ; A. AGUIRRE-SOTO.** *Anal. Sens.,* 2022, vol. 2, e202200004
- **TANIGUCHI, M. ; LINDSEY, J.S.** *Photochem Photobiol,* 2018, vol. 94, 290-327